# EUROPEAN PATENT APPLICATION

(11) **EP 4 495 870 A1**
(43) Date of publication of application: **22.01.2025**
(21) Application number: 23780924.9
(22) Date of filing: 30.03.2023
(51) Int. Cl.: G06Q 50/02

(54) **METHOD FOR EXCHANGE WITH PRODUCERS/SELLERS VIA FARM IN VIRTUAL SPACE, SERVER DEVICE, AND SYSTEM FOR LINKING FARM-RELATED PRODUCTS WITH VIRTUAL SPACE**

(30) Priority: 30.03.2022 JP 2022057758; 11.07.2022 JP 2022110920
(71) Applicant: Urban Greenery, Inc., Tokyo 163-0532 (JP)
(72) Inventor: OTA Yasuyuki, Tokyo 163-0532 (JP)
(74) Representative: Viering, Jentschura & Partner mbB Patent- und Rechtsanwälte
(86) International application number: PCT/JP2023/013279
(87) International publication number: WO 2023/190916

(57) **Abstract**

In order to reduce a workload by using a virtual farm, provided is a method for interaction with a producer/seller via a virtual farm, a server device, and a system for linking a farm-related product with a virtual space. Provided is a method 44 for interaction with a producer/seller via a virtual farm, the method including: a step of transmitting, to a user terminal 3 of a virtual visitor, a viewpoint image of moving through the virtual farm, based on an operation of the virtual visitor 23 who visits the virtual farm 24a as a buyer/tourist; a step of acquiring position information relating to a visitor 21 who visits the farm 24 as a producer/seller; and a step of displaying, at a coordinate position on the virtual farm 24a, an avatar element being set in advance for the visitor 21, the coordinate position corresponding to the position information.

## Description

### Technical Field

The present invention relates to interaction between a producer and a buyer via a farm (including a ranch and an agricultural field, hereinafter the same).

### Background Art

Hitherto, there have been known a farm at a care farm being a welfare facility (a farm attached to a welfare facility, hereinafter the same), a farm referred to as a public farm where a user is allowed to use an allocated plot, and a tourism farm. For example, a farm at a care farm provides a purpose in life for the elderly and create employment opportunities for people with disabilities. The agricultural task is considered to be effective in alleviating dementia and mental disabilities. For example, a public farm is a place a user who lives in an urban area regularly visits to cultivate an agricultural product and the like. This is also effective in fostering regional cooperation at the time of disaster.

PTL 1 discloses an agricultural product cultivation information utilization system. The agricultural product cultivation information utilization system is a system designed to assist users' agricultural product cultivation plans by enabling neighboring users who grow agricultural products in adjacent plots on a public farm or the like to share and mutually utilize cultivation information relating to their respective agricultural products.

Further, PTL 2 discloses an agricultural cultivation game. The agricultural cultivation game allows individuals without access to farming resources such as farmland, to engage in a simulated farming experience through a computer screen. In this game, players and administrators participate together in cultivating crops, enjoying the pleasure of agricultural production.

### Related Document

### Patent Document

Patent Document 1: Japanese Patent Application Publication No. 2014-035700
Patent Document 2: Japanese Patent Application Publication No. 2002-78975

### Disclosure of the Invention

### Technical Problem

Visiting an actual farm to talk with a producer or gaining insights into agricultural products and goods relating to agricultural products at an actual site can be troublesome.

In view of this, in order to reduce a workload by using a virtual farm, an object of the present invention is to provide a method for interaction with a producer/seller via a virtual farm, a server device, and a system for linking a farm-related product with a virtual space.

### Solution to Problem

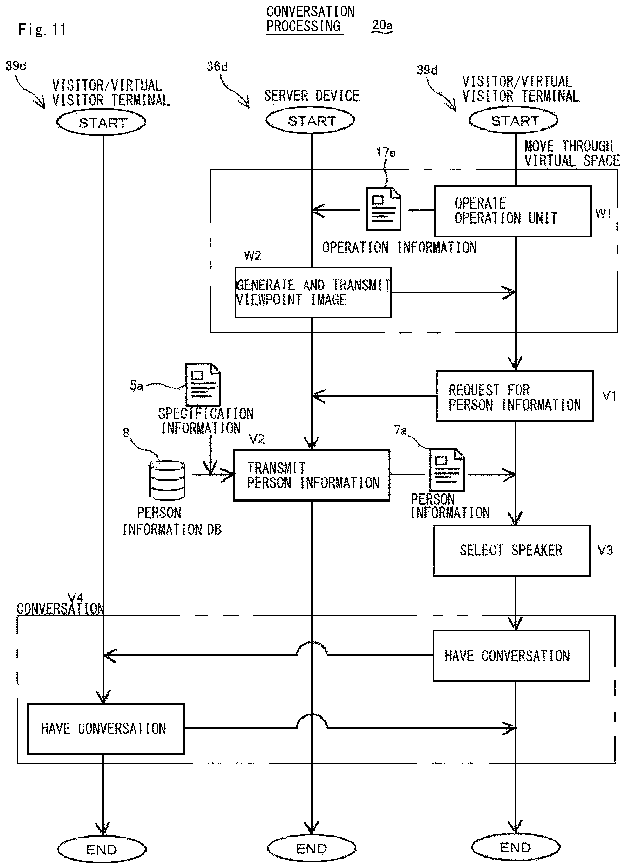

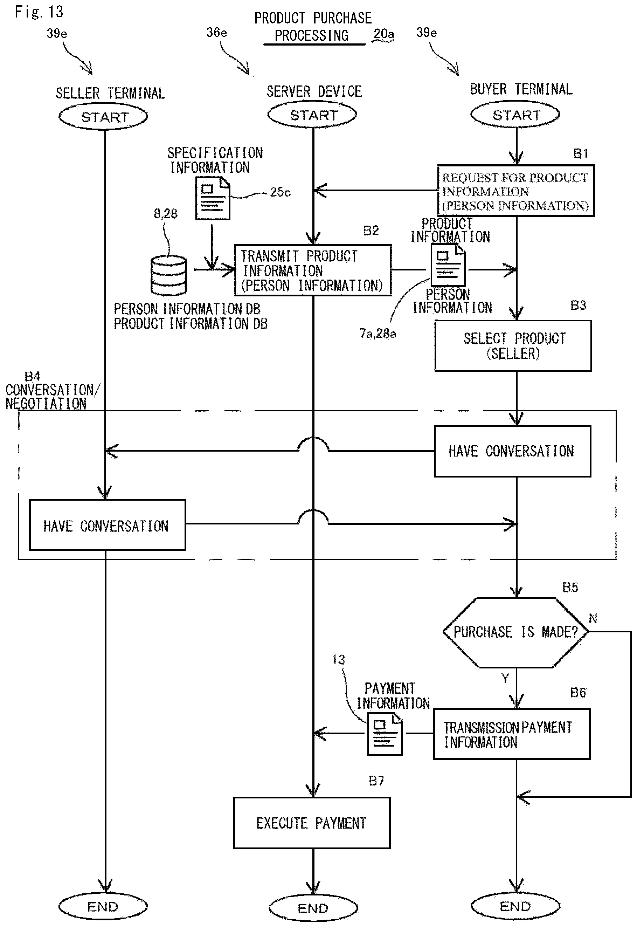

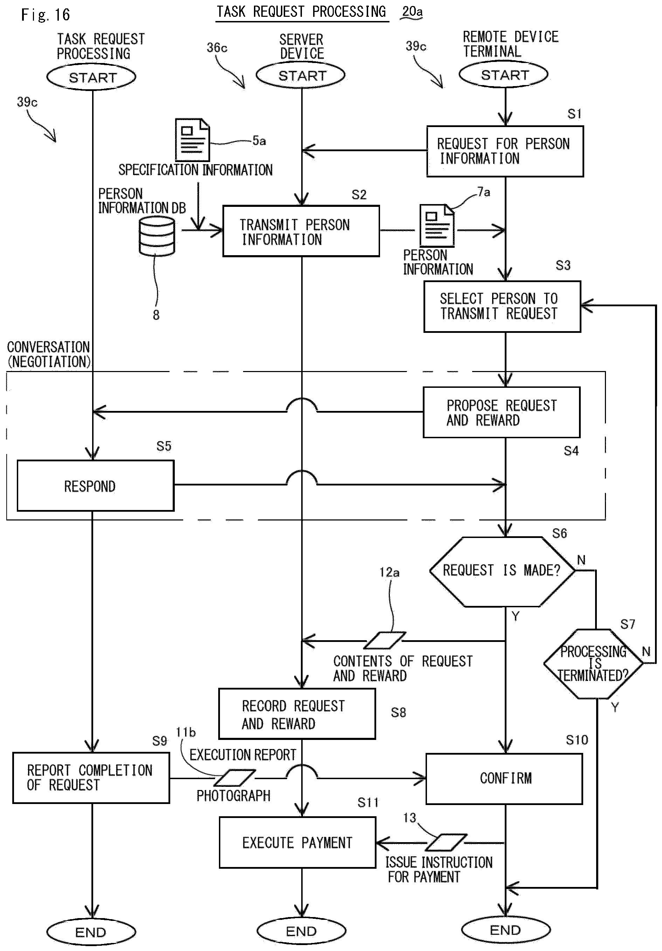

(1) According to the present invention, a method for interaction with a producer/seller via a virtual farm composed of two-dimensional or three-dimensional spatial data relating to a space formed by imaging the farm or a simulated space modeled after the imaging, the method being executed by a server device and a user terminal and including: a step of transmitting, to a user terminal of a virtual visitor, a viewpoint image of moving through the virtual farm, based on an operation of the virtual visitor who visits the virtual farm as a buyer/tourist; a step of acquiring position information relating to a visitor who visits the farm as a producer/seller; and a step of displaying, at a coordinate position on the virtual farm, an avatar element being set in advance for the visitor, the coordinate position corresponding to the position information.
(2) The method for interaction with a producer/seller via a virtual farm may preferably include a step of acquiring coordinate position information relating to a coordinate position of the virtual visitor on the virtual farm; and a step of displaying, at a position in a visual field through a user terminal of the visitor, an avatar element being set in advance for the virtual visitor in an overlapping manner, the position corresponding to the coordinate position information.
(3) Further, a predetermined position range including an agricultural product on the farm and a coordinate position range on the virtual farm are preferably set, the coordinate position range corresponding to the position range. The method preferably includes a step of displaying an agricultural product display element relating to the agricultural product in each of the position range in a visual field through a user terminal of the producer/seller and the coordinate position range displayed on a user terminal of the virtual visitor.
(4) Further, a farm-related product including an agricultural product obtained on the farm and a product relating to the agricultural product or an information medium including a web site on which the farm-related product is listed preferably includes access information including a link for visiting the virtual farm. The method further preferably includes a step of visiting the virtual farm via the access information.
(5) Further, the method preferably includes a step of performing conversation between the virtual visitor and the visitor by using audio information/text information.
(6) Further, the method preferably includes a step of acquiring person information relating to a visitor who is registered in advance, based on specification information for specifying the visitor, in such a way as to select the visitor with whom the virtual visitor performs conversation.
(7) Further, the person information preferably includes affiliation and attribute information relating to an affiliation and an attribute of a person and/or knowledge and experience information relating to agricultural knowledge and experience.
(8) Further, the method preferably includes a step of executing payment for purchasing a farm-related product including an agricultural product obtained on the farm and a product relating to the agricultural product.
   · The "position information relating to the visitor" is information relating to a position of the visitor on the farm who actually visits the farm, and is a concept including coordinates indicating a two-dimensional or three-dimensional point, coordinates indicating a predetermined range such as a plane field and a space, or an amount that can be converted into such coordinates, for example.
   · The "coordinate position information" is a concept including coordinates indicating a two-dimensional or three-dimensional point in a virtual space, coordinates indicating a predetermined range such as a plane field and a space, or an amount that can be converted into such coordinates, for example.
   · The "specification information" is information for specifying a person, for example, information for specifying an individual, such as a name, My Number, a pension number, a number of a driver's license, and physical features including facial features, and is a concept including information associated therewith and information that can be converted into such information.
   · The "person information" includes at least one of affiliation and attribute information relating to an affiliation and an attribute of a person, knowledge and experience information relating to agricultural knowledge and experience, and physical features including facial features, includes a profile and information disclosed by oneself to be recognized by others, and is a concept including information that can be converted into such information.
   The affiliation and attribute information is affiliation information relating to an organization one belongs to or a region where one resides, including, for example, a resident of a care farm, a care farm operator, one renting a farm plot, a farm operator, a farm employee, a shop owner, a shop employee, and a nearby resident, is attribute information including a mental or physical condition, such as medical history, and is a concept including information that can be converted into such information.
   The knowledge and experience information is information relating to knowledge and experience with regard to an agricultural task, including farming experience, agricultural research, and academic background in agriculture, and is a concept including information that can be converted into such information.
   · The "position range" indicates a point or a range for specifying a position or a range where the agricultural product is present on the farm, and is a concept including coordinates indicating a two-dimensional or three-dimensional point, coordinates indicating a predetermined range such as a plane field and a space, or an amount that can be converted into such coordinates, for example.
   · The "coordinate position range" is a coordinate range in a virtual space, which corresponds to the position range, and is a concept including an amount that can be converted into such a range.
   · The "farm-related product" includes an agricultural product and a product relating to the agricultural product. The agricultural product refers to all products generated through agriculture, including crops and livestock. This encompasses grains, vegetables, fruits, flowers, dairy products, meat, eggs, leather, and their processed goods, and is a concept that can be converted into such items. Examples of the processed goods include alcoholic beverage such as wine, and items like ham. The related product includes items derived from agricultural products harvested from the farm and specialty products originating from the surrounding area, encompasses agricultural products harvested nearby as well as crafts, confectioneries, and goods manufactured in the vicinity of the farm, and is a concept that can be converted into such items.
   · The "information medium" includes a tag attached to the farm-related product or a package thereof, a seal, a part printed/formed on the farm-related product or a package thereof, a paper medium such as a pamphlet and a leaflet on which the farm-related product is listed, a WEB page on which the farm-related product is listed, and an SNS site, SNS, and is a concept that can be converted into such items.
   · The "access information" is information that allows access to the virtual farm, such as a QR code (registered trademark) or a URL, which can be scanned using a camera of a user terminal or entered directly into the user terminal, and is a concept that can be converted into such information. For example, information that allows access to the virtual farm may be embedded into digital content such as images or music using a technology known as digital watermarking.
   · The "product information" is information relating to the farm-related product.
(9) According to another aspect of the present invention, a server device being used for a method for interaction with a producer/seller via a virtual farm composed of two-dimensional or three-dimensional spatial data relating to a space formed by imaging the farm or a simulated space modeled after the imaging, the method being executed by a server device and a user terminal, the server including: a coordinate acquisition means for acquiring position information relating to a visitor who visits the farm as a producer/seller; and a virtual space processing means for transmitting a viewpoint image of moving through the virtual farm, based on an operation of a virtual visitor who visits the virtual farm as a buyer/tourist, to a user terminal of the virtual visitor, and displaying, at a coordinate position on the virtual farm, an avatar element being set in advance for the visitor, the coordinate position corresponding to the position information.
(10) In the server device, the coordinate acquisition means preferably acquires coordinate position information relating to a coordinate position of the virtual visitor on the virtual farm, and the virtual space processing means preferably displays, at a position in a visual field through a user terminal of the visitor, an avatar element being set in advance for the virtual visitor in an overlapping manner, the position corresponding to the coordinate position information.
(11) Further, a predetermined position range including an agricultural product on the farm and a coordinate position range on the virtual farm are preferably set, the coordinate position range corresponding to the position range. The virtual space processing means preferably displays an agricultural product display element relating to the agricultural product in each of the position range in a visual field through a user terminal of the producer/seller and the coordinate position range displayed on a user terminal of the virtual visitor.
(12) Further, the server device preferably includes a storage unit configured to store product information relating to a farm-related product including an agricultural product on the farm and a product relating to the agricultural product, the product information being transmitted to a user terminal of the virtual visitor.
(13) A system for linking a farm-related product with a virtual space preferably includes a payment means for purchasing the farm-related product.
(14) Further, the server device preferably includes a person information acquisition means for acquiring person information relating to the visitor specified based on specification information for specifying the visitor, in such a way as to select the visitor with whom the virtual visitor performs conversation.
(15) Further, the person information preferably includes affiliation and attribute information relating to an affiliation and an attribute of a person and/or knowledge and experience information relating to agricultural knowledge and experience.
(16) According to further another aspect of the present invention, a system for linking a farm-related product with a virtual space, includes a farm-related product including an agricultural product obtained on the farm and a product relating to the agricultural product or an information medium including a web site on which the farm-related product is listed, and the server device described above, wherein the farm-related product or the information medium include access information including a link for visiting.
   · The "virtual space processing means" corresponds to W2 in an embodiment (see Fig. 11).
   · The "payment means" corresponds to B7 and S11 in an embodiment (see Fig. 13 and Fig. 16). Herein, the term "payment" includes a case in which an item such as an agricultural product is given as a reward for a request.
   · The "person information acquisition means" corresponds to V2, B2, and S2 in an embodiment (see Figs. 11, 13, and 16).

### Advantageous Effects of Invention

Interaction with a producer is facilitated.

### Brief Description of the Drawings

[Fig. 1] Fig. 1 is a schematic diagram illustrating an overview of a system via a farm and a system for linking a farm-related product with a virtual space.
[Fig. 2] Fig. 2 is a function block diagram illustrating another embodiment of the system via the farm.
[Fig. 3] Fig. 3 is an schematic diagram illustrating a state of screen display of user terminals of a visitor and a virtual visitor.
[Fig. 4] Fig. 4 is a function block diagram illustrating another embodiment of the system via the farm.
[Fig. 5] Fig. 5 is a schematic diagram illustrating one example of a hardware configuration of a server device.
[Fig. 6] Fig. 6 is schematic diagram illustrating one example of a hardware configuration of a user terminal.
[Fig. 7] Fig. 7 is a schematic diagram illustrating one example of a hardware configuration of a head-mounted display unit.
[Fig. 8] Fig. 8 is a flowchart illustrating one embodiment of a flow of registration processing in access control.
[Fig. 9] Fig. 9 is a flowchart illustrating one embodiment of a flow of log-in processing.
[Fig. 10] Fig. 10 is a schematic diagram illustrating a data structure of a person specification database.
[Fig. 11] Fig. 11 is a flowchart illustrating one embodiment illustrating a flow of conversation processing.
[Fig. 12] Fig. 12 is a function block diagram illustrating further another embodiment of the system via the farm.
[Fig. 13] Fig. 13 is a flowchart illustrating one embodiment illustrating a flow of processing of purchasing an agricultural product.
[Fig. 14] Fig. 14 is a schematic diagram illustrating a data structure of a product information database of a farm-related product.
[Fig. 15] Fig. 15 is a function block diagram illustrating one embodiment of the system via the farm.
[Fig. 16] Fig. 16 is a flowchart illustrating one embodiment illustrating a flow of processing of requesting an agricultural task from a remote person to a visitor.
[Fig. 17] Fig. 17 is a schematic diagram illustrating a data structure of a person information database.

### Description of Embodiments

### [1. Overview Description]

### (System 44 via Farm)

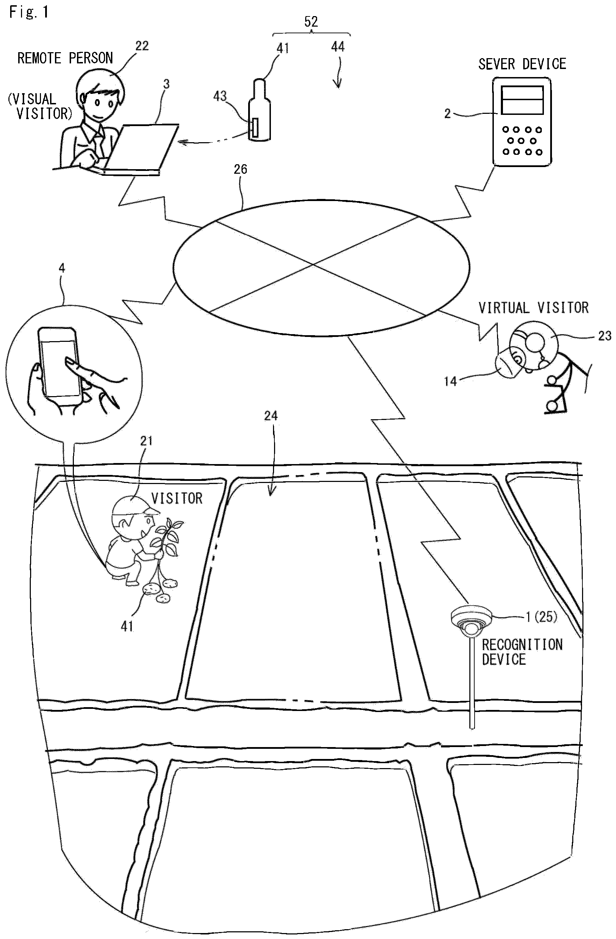

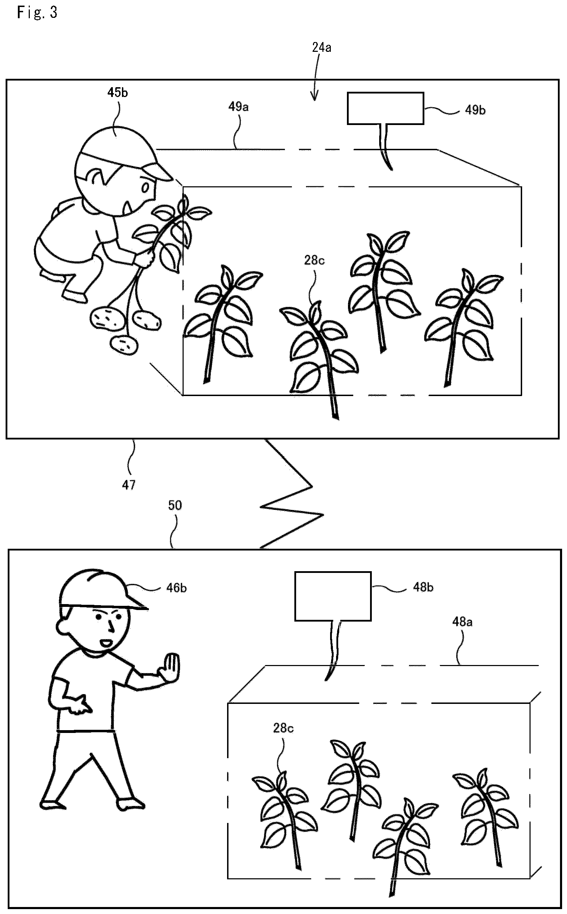

First, with reference to Fig. 1, description is made on an overview of interaction system via a farm according to the present invention. A system 44 for an interaction method via a farm illustrated in Fig. 1 (hereinafter, referred to as a system) is mainly used between a visitor 21 who visits a farm 24 and a remote person 22 who does not visit the farm 24 and is at home, for example. The remote person 22 includes a virtual visitor 23 who visits a virtual farm 24a (see Fig. 3) composed of three-dimensional spatial data relating to an imaged space formed by imaging the farm 24 or a simulated space modeled after the imaging.

The virtual visitor 23 visits the virtual farm 24a for the purpose of sightseeing, checking/purchasing a farm-related product 41, or interacting with a seller/producer. Herein, the producer/seller is the visitor 21 on the actual farm 24. Further, the virtual visitor 23 can interact with other virtual visitors 23 who visit the virtual farm 24a.

### (System 542 for linking Farm-related Product with Virtual space)

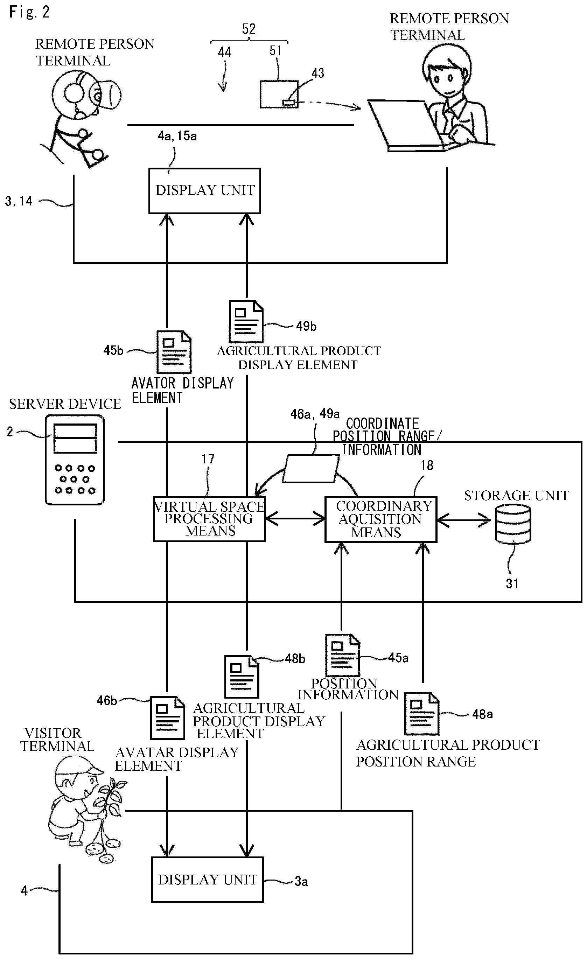

The system 52 for linking a farm-related product with a virtual space includes the farm-related product 41 including the agricultural product obtained on the farm or an information medium 51 including a web site on which the farm-related product is listed, and a server device 2. The farm-related product 41 or the information medium 51 (see Fig. 2) is provided. The information medium 51 includes access information 43 including a link for visiting the virtual farm 24a.

For example, a potential buyer picks up a bottle of wine, which is the farm-related product 41, at a store outside of the farm 24, and uses their own user terminal to read a QR code (registered trademark), which is the access information 43 printed on the packaging of the bottle of wine. The potential buyer, who is the virtual visitor 23, uses the user terminal as a remote person terminal 3, and accesses to the virtual farm 24a of the farm where grapes for the wine are cultivated. The virtual visitor 23 can check the condition of the grapes on the virtual farm 24a, interact with the visitor 21 being a producer to learn about the condition and features of the grapes and the wine. Then, based on the knowledge acquired on the virtual farm 24a, the potential buyer considers purchasing the wine.

A store that sells the farm-related product 41 includes a roadside rest area, a local farmers' market, a grocery store, a department store, a supermarket, and a convenience store, in addition to a shop on the farm 24 or the virtual farm 24a, and is a concept that can be converted into such locations.

### (Farm 24)

For example, the farm 24 (actual farm) is a tourism farm where tourists can enter or a general farm. The farm 24 may be a so-called public farm that is divided into a number of plots, each of which is rented out to a user who grows an agricultural product in a designated plot, or may be a farm attached to a facility for the elderly as a care farm.

### (Interaction)

The system 44 can display, on a terminal of the remote person 22, information relating to the visitor 21 visiting the farm 24 and a person being a registered user who is likely to be the visitor 21 if the date and time allow, as preliminary information for interaction.

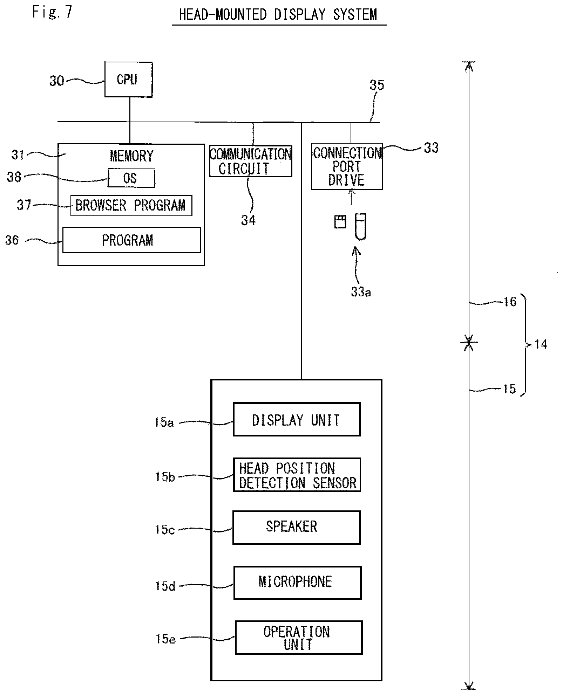

Further, for example, even a person among the remote persons 22 who cannot access the virtual farm 24a can grasp a condition of the farm 24 from an image acquired by a camera 25 installed on the farm 24, via a communication network 26 such as the Internet. Further, as described later, by logging into the system 44, the visitor 21 and the remote person 22 (including the virtual visitor 23), and a virtual visitor 3a and the remote person 22 who does not access the virtual farm 24a can interact with each other while mutually grasping person information 7a (see Fig. 7).

As one example of interaction, when the remote person 22, who cultivates an agricultural product by using one plot on the farm 24, cannot visit the farm 24 today, the remote person 22 can ask the visitor 21 to perform an agricultural task. When the visitor 21 is an experienced person about the agricultural task, the remote person 22 can receive a piece of advice from the visitor 21. In contrast, depending on a date, a relationship between a remote person and a visitor may be reversed. Specifically, the remote person 22 who issues a request for the agricultural task may receive a request for the agricultural task as the visitor 21. By cooperating with each other to manage and operate the farm, the burden of resources and effort relating to farm management and operation can be reduced. A person who receives the request for the agricultural task can receive a predetermined reward as an incentive for accepting the request. Note that the request may be accepted without a reward.

### (User)

In the present embodiment, when a user of the farm 24 (hereinafter, referred to as a user) is registered as a user, the user is registered in person specification database 6, for example (details thereof are described later). Note that registration is not mandatory. Even when a user does not visit the farm 24, the user can schedule a date with another user to request the agricultural task or make arrangement for interaction. Herein, examples of the user the farm 24 including the following persons.

The examples of the user include a producer who produces an agricultural product on the farm 24. Further, the user is a seller who sells the farm-related product 41 produced on the farm. Note that the user may be both a producer and a seller.

The examples of the user include a user who rents a plot on the farm 24 to perform the agricultural task. For example, a regional resident and a self-sufficient individual on a care farm are assumed. A user who rents a plot on the farm 24 may be a seller who sells the farm-related product 41 being produced.

The examples of the user include a person who does not rent a plot on the farm 24 but receives a request for the agricultural task. For example, a facility worker such as a user from a disability employment support office is assumed. Further, even a person who does not rent a plot on the farm 24 may receive a request for selling the farm-related product 41 as a seller.

The examples of the user include a user who does not rent a plot on the farm 24 but enjoys the farm trough sightseeing, tours, or walks. For example, a family member of a regional resident who rents the farm, a care farm resident who requires assistance, a care farm staff member, a family member of a care farm resident, and an individual registered for repeated entry to the farm are assumed. Further, a buyer of the farm-related product 41 is assumed. Such a buyer includes a potential buyer.

The examples of the user include a manager of the farm 24. An agricultural instructor such as a farmer, a disability employment support manager, a care farm staff member, and the like are assumed.

The examples of the user include a visitor on the virtual farm 24a. The visitor may rent a plot on the farm 24. Thus, the visitor may be a producer, and may also be a buyer. The virtual visitor 23 can visit the virtual farm 24a from a remote location. By linking with other virtual farms or virtual spaces other than farms, the user can visit different virtual spaces.

### [2. Respective Configurations]

### (System 44)

First, with reference to the function block diagram of Fig. 2, the system 44 according to one embodiment of the present invention is described.

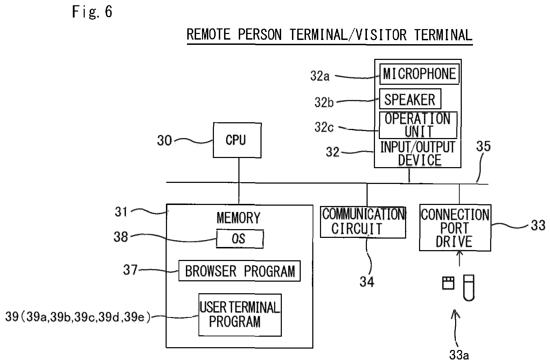

The system 44 includes the server device 2, a user terminal 3, 14 (hereinafter, referred to as a remote person terminal) owned by the virtual visitor 23, and a user terminal 4 (hereinafter, referred to as a visitor terminal) owned by the visitor 21. The server device 2, the remote person terminal 3 (14), and a visitor terminal 4 are connected in a mutual communicable manner via the communication network 26 such as the Internet (intranet) (see Fig. 1). Note that the reference symbol 14 is a head-mounted display system, which is described later (see Fig. 6) . Note that the remote person 22 can interact with the visitor 21 by exchanging text information without visiting the virtual farm 24a.

Further, in the system 44, a predetermined position range where an agricultural product is cultivated on the farm 24 and a coordinate position range on the virtual farm are set, the coordinate position range corresponding to the position range. Further, an agricultural product display element relating to the agricultural product is displayed in each of a visual field through the visitor terminal 4 of the visitor 21 and a viewpoint image of the remote person terminal 3 (14) of the virtual visitor 23.

For example, an avatar element 45b, 46b is formed of two-dimensional or three-dimensional spatial data relating to a captured image formed by imaging the visitor 21, the virtual visitor 23 or a simulated image modeled after the imaging. Note that a freely selected image may be used as the avatar element, regardless of the imaging.

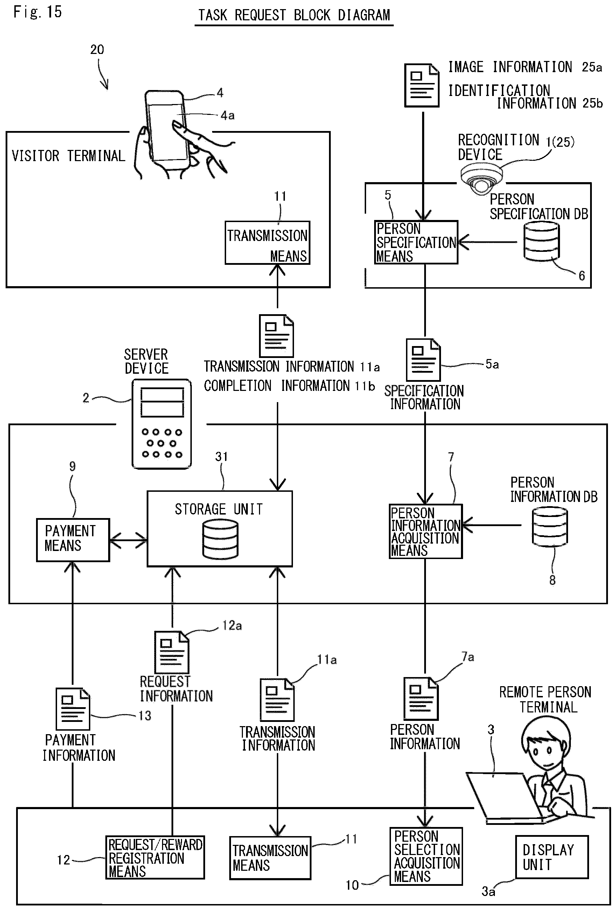

In the present embodiment, as an agricultural product display element 48b, 49b, a tag on which one or more pieces of information from product information 28 (see Fig. 15) are described is displayed. In addition, for example, as a tag, there may be used two-dimensional or three-dimensional spatial data relating to a captured image formed by imaging the agricultural product on the farm 24 or a simulated image modeled after the imaging.

Note that, for example, the data relating to the avatar element 45b, 46b and the data relating to the agricultural product display element 48b, 49b are stored in a storage unit 31 of the server device 2.

### (Server Device 2)

For example, in the present embodiment, a personal computer is used as the server device 2. The server device 2 mainly includes a virtual space processing means 17 and a coordinate acquisition means 18.

### (Remote Person Terminal 3 (14) and Visitor Terminal 4)

For example, in the present embodiment, the remote person terminal 3 (14) is a smartphone. Note that, a wearable computer that can be worn or attached as a computer, a head-mounted display system, a mobile phone, a tablet terminal, a personal computer, or the like may be used. The remote person terminal 3 (14) includes the display unit 3a (15a). The reference symbol 15a refers to a display unit of a head-mounted display system (see Fig. 6) . The remote person terminal 3 (14) displays the avatar element of the visitor 21 in the viewpoint image in the virtual space as virtual reality (VR).

### (Visitor Terminal 4)

In the present embodiment, the visitor terminal 4 is substantially the same as the remote person terminal 3 (14). In the present embodiment, the visitor 21 wears the visitor terminal 4 such as smart glasses or AR glasses. The visitor terminal 4 projects a pre-registered avatar element as a digital image onto the visual field of scenery of the actual farm 24 as augmented reality (AR). The display unit 3a being smart glasses or AR glasses is a section through which a scenery can be visually recognized in a transparent manner, and is a section on which a digital image is displayed in an overlapping manner.

### (Virtual Space Processing Means 17)

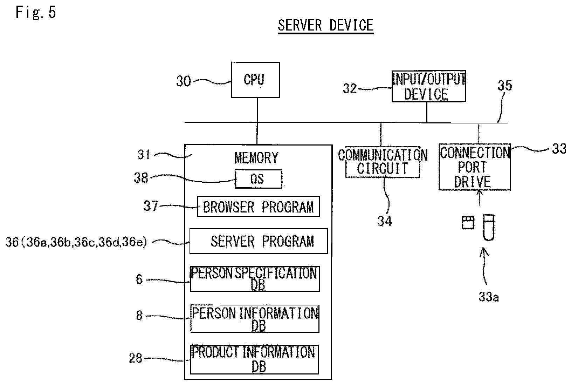

The virtual space processing means 17 generates a virtual image to be displayed by the display unit 3a (15a) of the remote person terminal 3 (14), based on operation information 17a relating to an operation amount that is output from an input/output device 32 (an operation unit 15e) of the remote person terminal 3 (14) (see Figs. 5 and 6). For example, the virtual space processing means 17 collaborates with a control device 16 of the head-mounted system 14 to execute various types of arithmetic processing or the like for generating an image or the like to be displayed by the display unit 15a.

### (Coordinate Acquisition Means 18)

The coordinate acquisition means 18 acquires the coordinate position (viewpoint coordinates) in the three-dimensional space, which corresponds to the viewpoint image displayed on the remote person terminal 3 (14). For example, in the present embodiment, an avatar element indicating another virtual visitor 23 is displayed by the display unit 3a (15a), based on the viewpoint coordinates. Note that the own avatar element may be displayed by the display unit 3a (15a) of the own terminal 3 (14).

### (Display Unit 3a (15a))

For example, as the display unit 3a (15a), a device for display an image, such as a liquid crystal display (LCD), a plasma display panel (PDP), and an organic electro-luminescence (EL) is used. Further, the display unit 3a may be provided with a touch panel. The touch panel outputs an output signal according to an operation from a user. A user can perform an operation of selecting information displayed by the display unit 3a (15a) or the like by operating the touch panel.

### (Avatar Element 45b of Visitor 21)

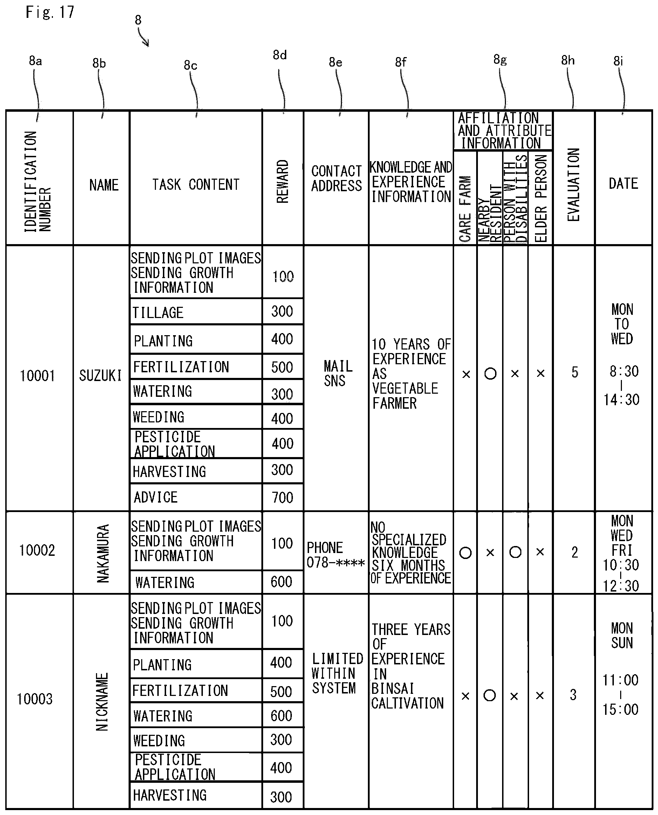

Specifically, the visitor terminal 4 acquires position information 45a on the farm 24, based on the GPS or a technique of indoor positioning, and transmits the position information 45a to the coordinate acquisition means 18 of the server device 2. The virtual space processing means 17 of the server device 2 converts the coordinate position in the virtual space, which corresponds to the position information 45a, and transmits the avatar element 45b of the visitor 21 (see Fig. 17) to be displayed at the coordinate position to the remote person terminal 3 (14).

### (Avatar Element 46b of Virtual Visitor (Remote Person))

Meanwhile, the server device 2 acquires coordinate position information 46a relating to the coordinate position of the virtual visitor 23 (the remote person 22), who visits the virtual space, in the virtual space. The virtual space processing means 17 transmits, to the visitor terminal 4, the avatar element 46b of the virtual visitor, which is set in advance. The avatar element 46b is to be displayed at a position on the farm 24, which corresponds to the coordinate position information 46a being acquired, while overlapping with the visual field through the visitor terminal 4 of the visitor 21.

### (Agricultural Product Display Element 48b, 49b)

Further, in the system 44, a coordinate position range 49a (see Fig. 3) in the virtual space, which corresponds to a predetermined position range 48a where an agricultural product is cultivated on the farm 24 (see Fig. 17), is set in advance, and is stored in the server device 2. The predetermined position range 48a where an agricultural product is cultivated on the farm 24 is a range including an agricultural product. The virtual space processing means 17 transmits the agricultural product display elements 48b and 49b to the visitor terminal 4 and the remote person terminal 3 (14), respectively. Thus, in the visual field through the visitor terminal 4 of the visitor 21, the agricultural product display element 48b is displayed at the position range 48a. Meanwhile, in the viewpoint image of the remote person terminal 3 (14), the agricultural product display element 49b is displayed at the coordinate position range 49a.

For example, the avatar element 45b, 46b and the agricultural product display element 48b, 49b are registered in advance and stored in the server device 2 or the user terminal 3 (14), 4.

### (Display Screen)

Next, with reference to Fig. 3, a state of screen display on the remote person terminal 3 (14) and the visitor terminal 4 is described. In the illustrated screen display, the upper part is a display screen 47 of the display unit of the remote person terminal 3 (14), and the lower part is a display screen 50 of the display unit of the visitor terminal 4.

### (Display Screen 47 of Virtual Visitor Terminal)

On the display screen 47 of the remote person terminal 3 (14), there is displayed the virtual farm 24a formed of two-dimensional or three-dimensional spatial data relating to a captured image formed by imaging the farm 24 or a simulated image modeled after the imaging. In the present embodiment, the virtual space formed of the three-dimensional spatial data formed by the imaging is displayed. Crops 28c are displayed as a part of a scenery in the virtual space. The coordinate position range 49a in which the crops are cultivated is set in advance to surround the crops 28c. The agricultural product 41 including livestock in addition to the crops may be specified by the coordinate position range 49a. In the present embodiment, the coordinate position range 49a is displayed on the display screen. The virtual space itself is a scenery, and hence an agricultural product to be sold in the virtual space is specified by setting the coordinate position range 49a. Further, on the display screen 47, the avatar element 45b of the visitor 21 and the agricultural product display element 49b are displayed. The coordinate position range 49a may not be displayed normally, and may be displayed by an operation of the remote visitor 22 (23). Further, in addition to a rectangular parallelepiped shape, a freely-selected shape such as a spherical shape and a cigar-like shape may be adopted as the coordinate position range 49a as long as the coordinate position range 49a includes the crops 28c to be specified. Further, the crops 28c to be specified may be indicated by an arrow, a drawn line, or the like instead of a range. Note that the farm-related product 41 including the livestock and an agricultural product in addition to crops may be specified by the coordinate position range 49a.

### (Display Screen 50 of Visitor Terminal)

The display screen 50 of the visitor terminal 4 corresponds to a captured moving image of the farm 24 or a visual field of the visitor 21 through smart glasses or the like. The position range 48a in which the crops are cultivated are set in advance to surround the crops 28c in the captured image of the visual field. In the present embodiment, the position range 48a is displayed on the screen. The crops to be sold are specified by setting the predetermined position range 48a in the scenery. Further, on the display screen 50, the avatar element 46b of the virtual visitor 23 and the agricultural product display element 48b are displayed. Note that the position range 48a is substantially the same as the coordinate position range 49a, a freely-selected shape such as an arrow may be adopted thereto. Note that the farm-related product 41 including the livestock and an agricultural product in addition to crops may be specified by the position range 48a.

The avatar element 45b, 46b and the agricultural product display element 48b, 49b are selected through the input/output device 32 by a user operation, or a part corresponding to the display unit is touched by a finger. With this, a corresponding person or product (the crops 28c) can be selected.

When a person is selected, the person information 7a, which is described later, can be acquired to initiate conversation. Meanwhile, when a product (the crops 28c) is selected, the product information 28a, which is described later, can be acquired to initiate purchasing.

### (Others in System 44)

The position range 48a and the coordinate position range 49a may be set to specify one agricultural product, or may be set to specify a predetermined range by a unit of rows, the number of fruit trees, or the like. A range being set may be a trading unit. For example, via the virtual space, ripeness, color, a size, and the like are examined, the coordinate position range 49a or the agricultural product display 49b that indicates a desired agricultural product is specified. In this manner, the product can be purchased individually.

The coordinate position range 49a in the virtual space and the position range 48a on the farm 24 may be set together with time information. In a case of a rental farm where plots are leased, the time information may be a lease period. When the time information is set together with the predetermined coordinate position range 49a, a range corresponding to the virtual space can be leased together with the land on the farm 24.

A person who cultivates/produces/rears an agricultural product on the farm 24 and a person who sells the agricultural product in the virtual space may be different individuals.

If the growth process of the agricultural product can be observed in the virtual space, it is possible to preemptively purchase the agricultural product even at a stage where it is not yet fully grown, such as in the seedling or immature stage. Furthermore, it is also possible to purchase a chicken that does not lay an egg or livestock that have not yet been processed for meat. In such a case, the remote person 22 can proceed with the purchase while having conversation with the person cultivating/producing/raising or selling the product.

In the present embodiment, both the agricultural product display element 48b, 49b and the position range 48a and the coordinate position range 49a are displayed on the display unit, but only one thereof may be displayed.

### (Embodiment of Conversation)

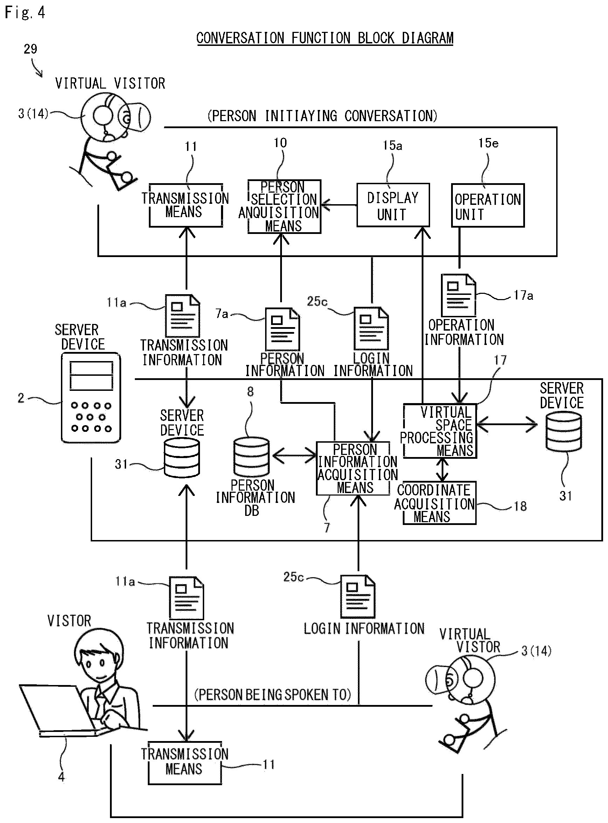

Next, another embodiment of the system 44 is described. A system 29 according to another embodiment illustrated in Fig. 4 (hereinafter, referred to as a second system) is substantially the same as the system 44 described above. Thus, the same parts are denoted with the same reference symbols, and description therefor is omitted.

### (Second System 29)

The second system 29 includes a function of establishing conversation between users. The second system 29 includes the server device 2 intermediating the remote person terminal 3 (14) and the visitor terminal 4. Note that the function of the second system 29 may be incorporated in the system 44.

### (Server Device 2)

The server device 2 further includes a person information acquisition means 7 and a person information database 8 (hereinafter, referred to as a person information DB).

### (Person Information Acquisition Means 7)

The person information acquisition means 7 acquires the person information 7a that is registered in advance, based on login information 25c (specification information 5a), from the person information DB 8. A data structure of the person information DB 8 is described later. The person information 7a is transmitted to the remote person terminal 3 (14) or the visitor terminal 4.

### (User Terminal 3 (14), 4)

The user terminal 3 (14), 4 further includes a person selection means 10 that acquires the person information 7a and a transmission means 11. In the drawing, it is assumed that the remote person terminal 3 (14) is a terminal for initiating conversation.

### (Person Selection Means 10)

The person selection means 10 is used to grasp information relating to a partner for conversation. An individual whose information is to be acquired is selected, and a request for the person information 7a is issued to the server device 2. When the virtual visitor 23 who visits the virtual space is desired to select another virtual visitor 23 to have conversation with, an avatar element thereof displayed in the virtual space is clicked by a user operation or touched through the display unit. With this, the person information 7a corresponding to the avatar element being clicked or touched may be requested.

### (Transmission Means 11)

The transmission means 11 transmits, to the visitor 21 or the remote person 22 (the virtual visitor 23) to have conversation with, audio information or text information as transmission information 11a. Note that, in a case of the audio information, the terminals having conversation may directly communicate with each other without the server device 2. The transmission information 11a is information delivered through a text, audio, or an image, and includes content such as everyday conversation, information relating to the farm-related product 41, and information, questions, requests, or responses relating to the agricultural task

### (Visitor Terminal 4)

In the present embodiment, the visitor terminal 4 is substantially the same as the remote person terminal 3. The visitor terminal 4 includes the transmission means 11.

### [3. Hardware Configuration]

Next, with reference to Fig. 5, Fig. 6, and Fig. 7, respective hardware configurations of the server device 2, the user terminal, and the head-mounted display system 14 are described.

### (Hardware Configuration of Server Device 2)

As illustrated in Fig. 5, for example, a computer is used as the server device 2 of the present embodiment.

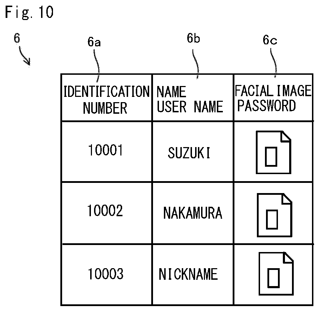

The computer includes a CPU 30. The CPU 30 is connected, via a bus line 35, to a memory (hereinafter, referred to as a storage unit) 31, the input/output device 32 including a keyboard, a mouse, and the like, a connection port 33 for being connected to/reading from a storage device 33a or the like, and a communication circuit 34 for communicating with the outside via the network. The storage unit 31 stores the person information DB 8, a product information DB 28 (described later), the person specification DB 6 (see Fig. 10), a server program 36 for processing the system 44, 29 and further a system 40, 20, described later, a browser program 67, and an operating system (OS) 38.

In the present embodiment, the server program 36 operates in collaboration while using the functions of the OS 38 and the browser program 37. Note that the server program 36 may operate independently without using the browser program 37 and the OS 38. For example, the server program 36 is stored in the storage device 33a. The server program 36 is installed in the server device 2 by reading the storage device 33a through the connection port 33.

### (Hardware Configuration of User Terminal 3, 4)

Next, a hardware configuration of the user terminal is described. The user terminal is used as the remote person terminal 3 and the visitor terminal 4. Note that the user terminal may be used as a virtual visitor terminal 14. Herein, a hardware configuration of the remote person terminal 3 is described, and description for the visitor terminal 4 is omitted.

The hardware configuration of the remote person terminal 3 is substantially the same as the hardware configuration of the server device 2 described above. Thus, the same parts are denoted with the same reference symbols, and description therefor is omitted.

As illustrated in Fig. 6, for example, a smartphone, a laptop computer, a head-mounted display, or the like may be used for the remote person terminal 3 of the present embodiment, for example.

The user terminal 3 includes the CPU 30. The CPU 30 is connected, via the bus line 35, to the storage unit 31, the connection port 33 for connecting/reading the storage device 33a and the like, and the communication circuit 34 for communicating with the outside via the network. For example, as the input/output device 32, a microphone 32a, a speaker 32b, and the operation unit 32c are included. Note that the microphone 32a, the speaker 32b, and the operation unit 32c are equivalent to corresponding parts of a head-mounted display 15 described later. The storage unit 31 stores a user terminal program 39 for processing the system 44, 29, 40, 20, the browser program 37, and the operating system (OS) 38. For example, the user terminal program 39 is stored in the storage device 33a. The server program 36 is installed in the user terminal 3, 4 by reading the storage device 33a through the connection port 33.

In the hardware configurations of the server device 2, the remote person terminal 3, and the visitor terminal 4 described above, the functions of the system illustrated in Fig. 2, 4, 12, and 15 are achieved by using the CPU 30, the server program 36, the remote person terminal (visitor terminal) program 39, for example. However, some parts or the entirety of them may be subjected to sequence control by using a logic circuit such as a micro controller or a programmable logic controller (PLC).

### (Hardware Configuration of Head-mounted Display System 14)

Next, a hardware configuration of the head-mounted display system 14 is described. In the hardware configuration of the head-mounted display system 14, the parts substantially the same as those in the hardware configuration of the remote person terminal 3 described above are denoted with the same reference symbols, and description therefor is omitted.

### (Head-mounted Display System 14)

Next, with reference to Fig. 7, the head-mounted display system as the virtual visitor terminal 14 is described.

The head-mounted display system 14 illustrated in the drawing includes the head-mounted display 15 that is mounted on a head of a user and the control device 16. Note that the head-mounted display system 14 described below is one example, and is not limited thereto.

### (Head-mounted Display 15)

The head-mounted display 15 mainly includes the display unit 15a that displays an image of the virtual space and a head position detection sensor 15b. In the present embodiment, a speaker 15c, a microphone 15c, and the operation unit 15e are further provided. Note that the speaker 15c, the microphone 15c, and the operation unit 15e may not be integrated with the head-mounted display 15, and any one of them may be integrated with the head-mounted display 15.

### (Display Unit 15a)

The display unit 15a includes right and left image display surfaces that are arranged at positions corresponding to right and left eyes, respectively, so as to cover right and left eyes of a user. A three-dimensional image may be presented to a user by displaying images with parallax on the right and left image display surfaces, respectively.

### (Head Position Detection Sensor 15b)

The head position detection sensor 15b detects posture information relating to orientation or inclination of the head-mounted display 15. The sensor that detects the posture information is achieved by an appropriate combination of a gyro sensor, an acceleration sensor, an angular acceleration sensor. A position and a posture of a head of a user are detected, and the detection result is reflected on a three-dimensional image of the virtual space displayed by the display unit 15a. In this manner, a three-dimensional image (viewpoint image) from a viewpoint position according to movement of a head of a user is presented.

### (Speaker 15c and Microphone 15c)

The speaker 15c outputs audio. Real-world audio within the virtual space, audio and music that consider the context of the virtual space, and audio from conversation with the visitor 21, the remote person 22, or other virtual visitors 23 are output.

When conversation with the visitor 21, the remote person 22, or other virtual visitors 23 takes place, voice sound of a user is input to the microphone 15c.

### (Operation Unit 15e)

For example, the operation unit 15e includes an operation lever and an operation button. By operating those components, an operation of selecting one from options displayed by the display unit 15a and confirming the selected option can be performed. For example, in the present embodiment, such components are used so that a plurality of agricultural products that can be purchased in the virtual space are displayed, an agricultural product to be purchased is selected therefrom, and the purchase is confirmed. Further, by operating the operation unit 15e, a user can move the three-dimensional image from the viewpoint position, creating the sensation that the user are moving within the virtual space. The operation unit 15e is communicably connected to the control device 16 via a communication circuit.

### (Control Device 16)

A hardware configuration of the control device 16 is substantially the same as the above-mentioned hardware configuration of the server device 2 or the remote person terminal 3. Thus, the same parts are denoted with the same reference symbols, and description therefor is omitted. The control device 16 executes generation of an image to be displayed by the display unit 15a of the head-mounted display 15 various types of arithmetic processing, and the like.

The storage unit 31 stores processing programs for executing generation of an image to be displayed by the display unit 15a and various types of arithmetic processing, and the like.

### [4. Program]

### (Flowchart of User Registration Processing)

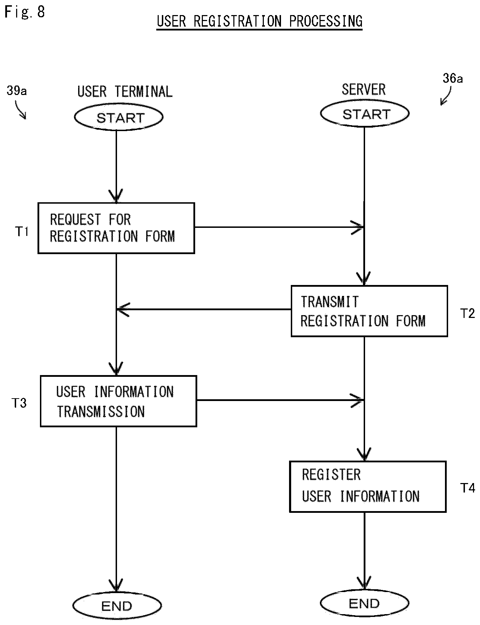

Next, with reference to Fig. 8, a flowchart of user registration processing is described. Fig. 8 is a flowchart illustrating one embodiment of processing of the user terminal program 39a used in the terminal 3, 4, 14 on the user side (hereinafter, referred to as a user terminal or the like) of the system 29, 44 and the server program 36a used in the server device 2.

In the present embodiment, the processing is executed by using a function of a WEB browser. However, the user registration processing may be executed by programs installed in the user terminal or the like and the server device 2.

(T1) When an unregistered user who wishes to use the system 20 operates the user terminal or the like, the user terminal or the like requests the server device 2 to transmit a registration for user registration. For example, in the present embodiment, the function of the WEB browser is used.

(T2) The server device 2 transmits the registration form. In the registration form, a user name and a password that are used for login processing, a handle name to be used in the system 44, 29, and the like are input. Further, information to be stored in the person specification DB 6 and the person information DB 8 is given. Note that input of information in the person information DB 8 may be optional.

When an individual enters the farm 24 as a user, a facial image required for facial recognition may be registered in the person specification DB 6.

Further, when a request for tasks such as the agricultural task is received, it is preferred that details are given in the person information DB 8 to serve as reference information for a requester.

Further, when a reward is received, information required for gaining a reward 8d (see Fig. 17) is input in the registration form. For example, the required information includes all the pieces of information for actually receiving the reward. Examples of the required information include information relating to a bank account, such as a bank name (bank code), a branch name (branch number), an account number, an account name, and information that can be converted into such information. When the reward 8d is in a form of electronic money, points usable within the system, virtual currency, tokens (cryptocurrency), or the like, all the pieces of information required for receiving electronic money, points usable within the system, virtual currency, tokens (cryptocurrency), or the like are input. All the required pieces of information may be at least minimum information required for receiving the reward.

Note that these registration items may be entered all at once or registered incrementally as needed.

(T3) An unregistered user inputs information for registration in an entry column, and the information is transmitted to the server device 2.

(T4) The information required for registration is registered in the person specification DB 6 and the person information DB 8.

### (Flowchart of Login Processing)

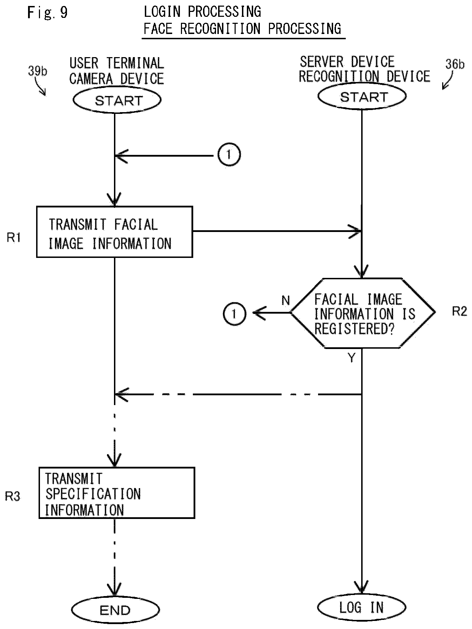

Fig. 9 is a flowchart illustrating one embodiment of processing of the user terminal program 39b used in the user terminal or the like of the system 29, 44 and the server program 36b used in the server device 2.

(R1) A user who wishes to log in activates the user terminal program 39b of the system 29, 44, inputs a user name and a password, which are registered, on a login information input screen, and transmits the information to the server device 2. Note that the visitor 21 can log in through facial recognition by a recognition device 1 (see Fig. 1), but may log in alternatively by using a user name and a password.

(R2) The server device 2 refers to and searches a user registration database (for example, see a person registration DB 6 in Fig. 10) to determine whether there is an existing registration matching with a user name 6b and a password 6c that are transmitted thereto. When there is not matching registration, the processing returns to R1. When there is a matching registration, logging in the system 29, 44 is successfully executed. At the time of login, the user terminal program 39d (see Fig. 11) for interaction and conversation is activated. Note that a mechanism called social login may be used for login.

### (Data Structure of Person Specification DB 6)

Fig. 10 illustrates a data structure of the person specification. For example, the person specification DB 6 illustrated in the drawing includes an identification number 6a, a name/user name 6b, and registered facial image information or a password 6c.

(R3) In a case of facial recognition, when the matching registration is confirmed, the recognition device 1 transmits specification information such as an identification number 5a to the server device 2 (see a route indicated by the two-dot chain line) .

### (Recognition Device 1)

The recognition device 1 (see Figs. 1 and 15) is a device that specifies the visitor 21 on the farm 24 and acquires a name of a specified person or information such as an identification number that can be converted into a name. For example, in the present embodiment, a device integrate with a camera device 25 is employed. The recognition device 1 includes the person specification means 5 and the person specification DB 6, which are described above. The recognition device 1 may be provided at the entrance/exit of the farm 24 to manage entry and exit of the visitor 21. Further, a plurality of recognition devices may be provided on the farm 24 so as to specify a position/time of the visitor 21 on the farm 24 and acquire an action history.

### (Facial Recognition Processing)

For example, a program trained through machine learning for facial recognition is incorporated in the recognition device 1. When the visitor 21 enters the farm 24, the camera device 25 detects a face of the visitor 21. The person specification means 5 of the recognition device 1 specifies the visitor 21, based on the data registered in the person specification DB 6, and transmits the specification information 5a to the server device 2. Note that machine learning is described later.

### (Flowchart illustrating Conversation Processing)

Fig. 11 is a flowchart illustrating one embodiment of processing of the user terminal program 39d used in the visitor terminal 4, the virtual visitor terminal 3 (14) of the second system 29 and the server program 36d used in the server device 2. The present flowchart illustrates conversation processing. The flowchart illustrated in Fig. 11 illustrates an interaction method 20a.

First, description is made on processing of changing the viewpoint image in the virtual space, which is displayed by the display unit 15a by operating the operation unit 15e by the virtual visitor 23. In the present embodiment, it is assumed that the virtual visitor 23 moves within the virtual space, finds another virtual visitor 23 to have conversation with, and then initiates conversation. Thus, the processing of changing the viewpoint image is executed before the conversation processing. However, the processing of changing the viewpoint image may be executed after the conversation processing.

(W1) By operating the operation unit 15e, the CPU 30 of the remote person terminal 3 (14) transmits the operation information 17a to the server device 2.

(W2) A displacement amount of the viewpoint coordinates is acquired based on the operation information 17a, and the viewpoint image at the viewpoint coordinates being displaced is generated transmitted to the remote person terminal 3 (14).

Next, the conversation processing is described.

(V1) In order to select a person to have conversation with, the CPU 30 of the remote person terminal 3 (14) can request a server 2 for the person information 7a. The request may be issued for the person information 7a relating to all the persons logging in the system or the person information 7a relating to a specific person. When narrowing down persons, a screen for filtering search (omitted in illustration) is displayed by the display unit 15a, a filtering item is selected, and then a request is issued. Further, when an avatar element of the virtual visitor 23 to have conversation with is displayed by the display unit 15a, the avatar element may be selected via the operation unit 15e. Note that the visitor 21 who can visually recognize the virtual visitor 23 through the AR glasses may issue a request for the person information 7a relating to the virtual visitor 23.

(V2) Based on the request, the person information 7a is transmitted to the remote person terminal 3 (14). A person who logs in the system 29 transmits the login information 25c to the server 2. Thus, the server device 2 can acquire the person information 7a, based on the login information 25c and the person information DB 8.

(V3) A person to have conversation with is selected.

(V4) A message expressing the desire to have conversation is sent to the remote person terminal 3 (14) of the person (see the transmission information 11a in Fig. 4). When a confirmation message (the transmission information 11a) is received from the other party, conversation takes place via the server device 2. Conversation may be established through the text information and the audio information. Note that, when a contact address of a person to have conversation with is available from the person information 7a, a phone, a communication application, a chat, a mail, or the like may alternatively be used instead of the second system 29.

In the second system 29, a head-mounted display system is used as the virtual visitor terminal 14, and a personal computer, a smartphone, or the like may be used instead. When a personal computer or the like is used, an image of the virtual space is displayed by the display unit 3a. In the virtual space, the viewpoint image in the virtual space is moved by the input/output device 32 (see Fig. 5).

### [5. Other Embodiments]

### (Third System 40)

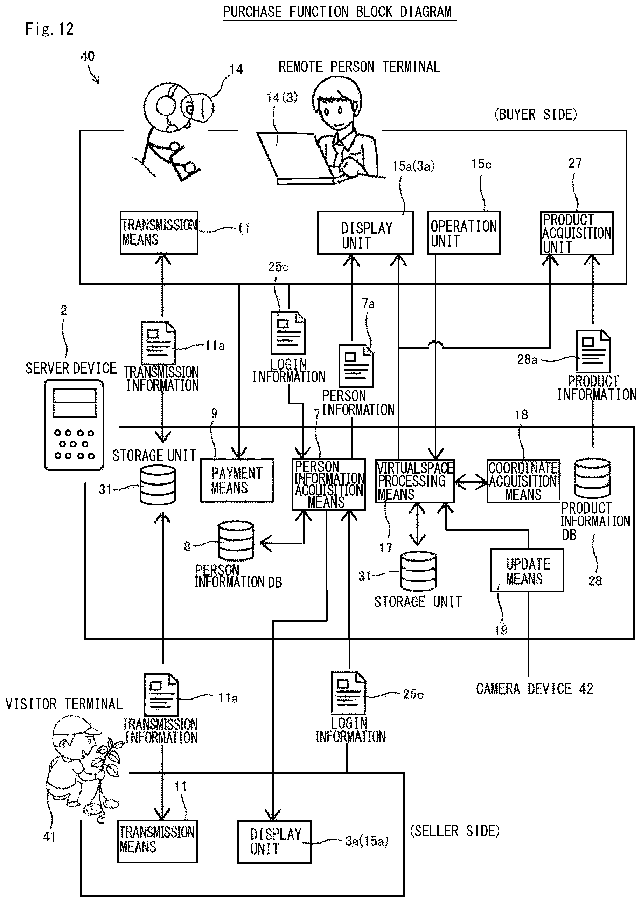

Next, further another embodiment of the system 44 is described. A system 40 of another embodiment illustrated in Fig. 12 (hereinafter, referred to as a third system) is substantially the same as the second system 29 described above. Thus, the same parts are denoted with the same reference symbols, and description therefor is omitted.

In the third system 40, the virtual visitor 23 being a buyer purchases an agricultural product from the visitor 21 being a seller. Note that the remote person 22 may be a buyer. The third system 40 includes the remote person terminal 3 (14), the visitor terminal 4, and the server device 2 intermediating those terminals.

### (Server 2 and Remote Person Terminal 3 (14) of Third System 40)

The server 2 further includes a payment means 9, an update means 19, and the product information database (hereinafter, referred to as the product information DB) 28. The reference symbol 42 refers to a camera that acquires three-dimensional data. The remote person terminal 3 (14) includes a product acquisition means 27.

### (Payment Means 9)

The payment means 9 processes the payment for the farm-related product 41 to the visitor 21 being a seller/producer. The payment is based on payment information 13. The payment information 13 includes payment conditions. The payment conditions include a payment method, a currency type, a payment due date, and the like. The payment information 13 is transmitted from the remote person terminal 3 (14) to the server device 2. The payment information 13 is stored in the storage unit 31.

Further, the visitor 21 and the remote person 22 may negotiate and determine the price/reward amount between themselves. The price/reward amount is paid to the visitor 21 in a form of cash, electronic money, points that can be converted into cryptocurrency or tokens (cryptocurrency) or can be used to purchase a product/service in the system 40, cryptocurrency, tokens (cryptocurrency), or the like.

Further, as a payment method may involve items such as an agricultural product being used as a reward. For example, a payment method that provides a reward without involving monetary exchange may also be acceptable.

The reward for tasks such as the agricultural task requested of the visitor 21 may be settled, and details thereof are described later. Based on the request details registered in the storage unit 31, the reward is paid to the visitor 21 upon completion of the task. The reward amount for each request detail is pre-registered in the person information 7a.

### (Update Means 19)

The update means 19 updates an image of the virtual space so as to correspond to a seasonal change on the farm 24 and growth of an agricultural product. The update means 19 collects images of three-dimensional data by a camera device 42 that collects the three-dimensional data, generates the virtual space to be displayed, and stores the virtual space in the storage unit 31. Note that the camera device 42 may be fixed on the farm 24.

### (Product Acquisition Means 27 and Product Information DB 28)

The product acquisition means 27 acquires the product information 28a from the product information DB 28. Acquisition of the product information 28a is executed by an operation of a user who operates the remote person terminal 3 (14). For example, a user clicks a product image (omitted in illustration) to be sold in the virtual space, and thus the product information 28a is acquired. For example, a product can be specified by the position range 48a, the agricultural product display element 48b, the coordinate position range 49a, and the agricultural product display element 49b, which are described with reference to Fig. 3. Herein, the product acquisition means 27 corresponds to B1 (see Fig. 13) in an embodiment.

### (Seller 43 and Visitor Terminal 4)

As a seller in the third system 40, a seller sells a product via the visitor terminal 4.

For example, in the present embodiment, a smartphone is used as the visitor terminal 4. In addition to this, a mobile phone, a tablet terminal, a personal computer, a wearable computer that can be worn or attached as a computer, or the like may be used. Examples of a wearable terminal include a smart watch, smart glasses, and the like.

### (Flowchart illustrating Purchasing Processing)

Fig. 13 is a flowchart illustrating one embodiment of processing of the user terminal program 39e used in the remote person terminal 3 (14) of the third system 40 and the server program 36e used in the server device 2. The present flowchart illustrates purchasing processing.

(B1) In order to purchase a product, the CPU 30 of the virtual visitor terminal 14 requests the server 2 for the product information 28a. The request may be issued for the product information 28a relating to all the sellers who log in the system or the product information 28a relating to a specific product. When narrowing down products, a screen for filtering search (omitted in illustration) is displayed by the display unit 3a (15a), a filtering item is selected, and then a request is issued. Further, a product image (omitted in illustration) displayed by the display unit 3a (15a) may be selected. When the product information 28a is requested, the person information 7a relating to the seller may be requested.

(B2) Based on the product information database (product information DB) 28, the product information 28a is transmitted to the remote person terminal 3 (14). In this state, the person information 7a relating to the seller may be transmitted.

### (Data Structure of Product Information DB 28)

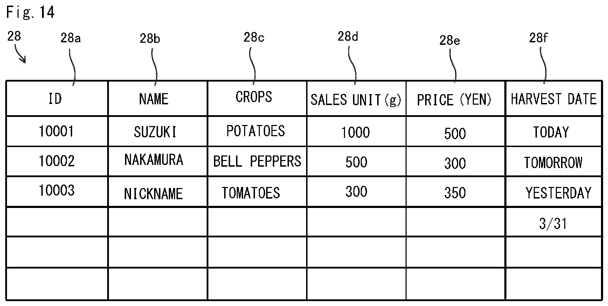

Fig. 14 illustrates a data structure of the product information DB. For example, the product information DB 28 illustrated in the drawing includes an identification number (ID) 28a, a name 28b, the crops 28c, a sales unit 28d, a price 28e, and a harvest date 28f. Note that other pieces of information may be registered. In place of the crops, the agricultural product or the farm-related product 41 may be used.

The identification number 28a is one number allocated to each person. The person specification DB 6 and the person information DB 8 are relational databases in which an identification number and a name are associated with each other. Thus, the person information 7a can be retrieved based on a specific identification number 28a in the product information DB 28. In the present embodiment, from the product information 28a being received, the person information 7a relating to a person who cultivates the crops 28c, such as the knowledge and experience information 8f and the affiliation and attribute information 8g can be considered when making a purchase decision. As the name 28b, a user name, a pen name, or the like may be registered instead of a real name. The crops 28c is a type of cultivated crops. The sales unit is a unit of sales. For example, purchase may be made by each unit. The price 28e is a price per unit. The price may be set in a form of points, virtual currency such as Bitcoin, tokens (cryptocurrency), or the like. The harvest date 28f is a date on which the crops 28c are harvested.

(B3) The visitor 21 as a seller of a product to be purchased is selected.

(B4) A message expressing the desire to have conversation is sent to the visitor terminal 3 (the transmission information 11a). When a confirmation message (the transmission information 11a) is acquired, conversation takes place via the server device 2. Conversation/negotiation may be established through the text information and the audio information. Note that, when a contact address of a seller is available from the person information 7a, a phone, a communication application, a chat, a mail, or the like may alternatively be used instead of the third system 40.

Note that the processing may not involve conversation in step B4, and may directly proceeds to step B5 to purchase a product.

(B5) Whether to make a purchase is determined based on an input operation of the virtual visitor 23. When a purchase is not made, the processing is terminated.

(B6) When a purchase is made, payment information 13 including an intention to make a payment, a price, and other necessary information such as a product name, a quantity, and a delivery date is transmitted to the server device 2.

(B7) The purchase price is paid. In the present embodiment, the payment may be made in a form of points that can be used in the third system 40, virtual currency, tokens (cryptocurrency), or the like. Note that the payment may be made by transferring cash to a pre-registered bank account or the like.

After the payment, the seller delivers the agricultural product or the like to the buyer via postal mail, delivery services, or the like. The buyer may register an evaluation 8h (see Fig. 16) based on the received product. Meanwhile, the seller may also register an evaluation 8h regarding interaction with the buyer.

### (Fourth System 20)

Next, another embodiment of the system 44 is further described. The system 20 according to another embodiment illustrated in Fig. 15 (hereinafter, referred to as a fourth system) is substantially the same as the second system 29 described above. Thus, the same parts are denoted with the same reference symbols, and description therefor is omitted.

The system 20 is different from the second system 29, mainly in that the recognition device 1 that specifies a visitor on the farm 24 and a request/reward registration means 12 provided to the remote person terminal 3 (14) are included.

### (Request/reward Registration Means 12)

The request/reward registration means 12 registers, in the storage unit 31, contents of a request including a person receiving the request, a request content, a reward amount, and the like.

### (Flowchart illustrating Request Processing)

Fig. 16 is a flowchart illustrating one embodiment of processing the user terminal program 39c used in the visitor terminal 3, the remote person terminal 3 (14) of the fourth system 20 and the server program 36c used in the server device 2. The present flowchart illustrates request processing.

(S1) After login, the user terminal program 39c is activated. By an operation of the remote person 22, the server device 2 is requested to transmit information relating to the visitor 21 and/or registrant (hereinafter, referred to as a visitor or the like) who is to receive a request, based on the program 39c. While issuing a request, a condition may be specified based on a desired task date and time, a task content, a reward range, affiliation and attribute information or a gender of the visitor or the like, or the like, and the condition may be transmitted to the server device 2.

(S2) The server device 2 receives the specification information 5a from the recognition device 1 in real time or for each predetermined time. The CPU 30 of the server device 2 refers to the person information DB 8, and acquires the person information 7a, based on from the specification information 5a.

Note that the visitor 21 can ensure that the remote person 22 is unable to grasp that the visitor 21 is visiting the farm 24.

### (Data Structure of Person Information DB 8)

Fig. 17 illustrates a data structure of the person information DB. For example, the person information DB 8 illustrated in the drawing includes an identification number 8a, a name 8b, a task content 8c, the reward 8d, a contact address 8e, the knowledge and experience information 8f, the affiliation and attribute information 8g, the evaluation 8h, and a date 8i. Note that other pieces of information may be registered.

The identification number 8a is one number allocated to each person.

As the name 8b, a user name, a pen name, or the like may be registered instead of a real name.

Examples of the task content 8c include transmitting a plot image, transmitting growth information, planting seeds or seedlings, fertilizing, watering, weeding, pesticide spraying, harvesting, providing a piece of advice, and the like. Other tasks may be registered. Each user may be allowed to register a task that can be performed.

The reward 8d is determined in advance based on levels of effort and expertise required for the agricultural task. Note that, for example, a user may register the reward, based on user's strengths and weaknesses.

With regard to the contact method 8e, a contact method and a contact address within the scope permitted by a user are registered.

With regard to the affiliation and attribute 8g, care farms and nearby residents are registered as affiliations, and people with disabilities and the elderly are registered as attributes. Users may add other items or provide more detailed registration for affiliations and attributes.

The evaluation 8h is an evaluation on a completed request, which is given by a requester. In the present embodiment, a 5-point evaluation system is adopted, where a higher number from 1 to 5 indicates a better evaluation. The number represents the average evaluation obtained for each request. Further, the evaluation can be in any number of stages, converted into symbols like alphabets, or given in a 0-100 point scale.

The available visiting date 8j refers to a usual time when the farm 24 is visited. Additionally, specific dates may be registered in a pinpoint manner.

Note that, in the present embodiment, the items other than the identification number 8a can be registered freely by a user. It is preferable for a user not to register information the user does not wish to disclose. Note that a range of the person information DB 8 that can be made public may be specified.

Referring back to Fig. 16, when there is a condition specified by the remote person 22 (hereinafter, referred to as a requester), among the visitors or the like who permit transmission of the position information and the person information 7a, the person information 7a relating to a person satisfying the condition may be transmitted. When there are a large number of matching persons, the predetermined number of persons are extracted in the order of highest evaluation, and are transmitted. When suitable candidates are not found, the requester is notified accordingly. Note that, even in a case where no suitable candidates are found, when at least the date and task content of match with those of a certain person, the person information 7a relating to such a person may be transmitted.

Further, in the present embodiment, for example, when no special conditions are set in the request from the requester, one or more persons with a high evaluation are specified from the visitors 21 who are currently visiting the farm 24, and are transmitted to the remote person terminal 3. Note that the person information 7a relating to all the visitors 21 may be transmitted.

(S3) Based on the person information 7a, the visitor or the like who is to receive a request is specified.

(S4) As the transmission information 11a, the visitor or the like is notified of a name, a handle name, or an identification number of the requester, and a task date and a task content to be requested. In the present embodiment, for example, the information input in step S1 is adopted as the date and task content. Details of the task date, the task content, and the like are specified, information for specifying the details is included and given. Note that a request may be made without transmitting a name, a handle name, or an identification number of the requester.

(S5) When the visitor or the like receiving the notification accepts the request, the visitor or the like sends a confirmation reply (the transmission information 11a) to the requester. When there are questions or requests regarding unclear matters such as the task date, the task content, and the reward amount, the visitor or the like asks the requester about unclear information (the transmission information 11a). Before replying, the visitor or the like may request the server 2 for person information corresponding to a name, a handle name, or an identification number of the requester.

### (S4 to S5)

The visitor or the like and the requester exchange communication with regard to the task date, the task content, and the reward amount (see the two-dot chain line) . Communication can be executed through the text information and the audio information.

Note that, when a contact address of the visitor or the like is available from the person information 7a, a phone, a communication application, a chat, a mail, or the like may alternatively be used instead of the system 20.

(S6) Whether to issue a request is decided.

(S7) When a request is not issued, the processing is terminated. When the visitor or the like who is to receive a request is selected again, the processing returns to step S3.

(S8) When a request is issued, request information 12a is registered in the server device 2. In the present embodiment, the request information 12a corresponds to the requester, the visitor or the like, the task date, the task content, and the reward amount. Other items may be included in the request content. For example, the arrangement between the parties may be registered.

(S9) The visitor terminal 4 transmits, to the remote person terminal 3 (14), completion information 11b indicating completion of the task. The completion information 11b may indicate completion, and may be text information or audio information indicating completion of the task, or image information acquired by photographing a completion state.

(S10) When the requester acquires the completion information 11b and confirms completion of the task, the requester transmits the payment information 13 to the server device 2. The payment information 13 includes a payment instruction, the evaluation 8h on the visitor or the like, and other items to be registered.

(S11) The reward is paid. In the present embodiment, the reward is paid using points that can be used in the system 20, virtual currency, or tokens (cryptocurrency). Further, for the payment, credit card integration may be incorporated into the system. Moreover, cash, the points described above, virtual currency such as Bitcoin, tokens (cryptocurrency), or the like may be transferred to an account that is registered in advance.

### (Modification Example)

Next, a modification example of the system 20 is described. The system according to the modification example is substantially the same as the system 20 described above, and description for the same parts is omitted.

The system according to the modification example does not use facial recognition executed by the recognition device 1. A base station (omitted in illustration) is installed in the vicinity of the entrance/exit of the farm 24. When the visitor terminal 4 receives a radiowave from the base station, the visitor terminal 4 transmits a signal indicating that the farm 24 is visited. The signal is an own identification number or identification information 25b (see Fig. 15) that can be converted thereto. The identification number is transmitted to the recognition device 1 via a wireless LAN on the farm 24 or the communication network 26 such as the Internet connection. The recognition device 1 specifies a person corresponding to the identification information 25b, based on the person specification DB 6.

### [6. Others]

When the visitor terminal 4 of the visitor 21 includes the GPS function, the position information may be acquired to grasp, within the virtual space, the position of the visitor 21 on the farm 24. For example, at the corresponding position of the visitor 21 in the virtual space, an avatar element (avatar image) of the visitor is displayed. With this, a cultivated agricultural product may be purchased while meeting, meeting and talking, or talking with the visitor in the virtual space.

Further, the position information indicates the position of the visitor 21 on the farm, and hence it is easy to find the visitor to have conversation with.

In the head-mounted display system 14 described above, the head-mounted display 15 and the control device 16 may be provided as separate bodies, or may be integrated with each other.

The head-mounted display system 15 is not required to be a dedicated system, and may be achieved by mounting a smartphone to a goggle-type headset, for example.

Examples of the head-mounted display include a virtual reality-type head-mounted display on which only a virtual space created by computer graphics or the like is displayed and a mixed reality-type head-mounted display on which a real space (for example, a real space displayed in an optically transparent manner) and a virtual space in real time. The present invention is applicable to both the head-mounted displays.

The person specification DB 6 may be provided to the server device 2 or an external server, instead of being provided integrally with the camera device 25. Person specification is executed in the server device 2.

Further, the person specification means 5 may be provided to the server device 2. The camera device 25 is provided at the entrance/exit of the farm, and image information 25a being acquired is transmitted to the server device 2. The server device 2 manages entry/exit of the farm.

The items described as the modification example, the other embodiment, and others may be combined as appropriate with the embodiment described above, and the combination may be used.

In the fourth system 40, instead of a real visual field on the farm, a captured image formed by imaging the farm 24 or a simulated image modeled after the imaging may be set to the visitor terminal 14.

### (Machine Learning)

Herein, machine learning is described. Examples of the machine learning include "supervised learning", "unsupervised learning", and "reinforcement learning". Further, to achieve these methods, there is a technique known as "deep learning", which involves learning to extract features themselves.

In the present embodiment, the CPU (see Fig. 5) is used. For example, when a GPU or the like is adopted, the higher processing speed can be achieved.

"Supervised learning" involves providing a large amount of teacher data, that is, pairs of input and result data, to learn the features present in those datasets. This approach inductively acquires a model that can estimate results from inputs.

Further, "unsupervised learning" involves providing a large amount of input data alone to learn the distribution of the input data. With this method, tasks such as compression, classification, and formatting of input data can be performed without being providing corresponding teacher output data. For example, the features in those datasets can be clustered into similar groups. By using the results to establish some criteria and assign outputs for optimizing the criteria, it is possible to achieve predictions.

Further, for example, "reinforcement learning" is a method where learning is performed to observe a state of an environment, decide an action, and maximize a reward for such an action. The environment changes according to certain rules, and an action of an individual may also affect the environment. A reward are returned each time an action is taken. The goal is to maximize the total reward over the future. Learning starts from a state where the consequences of actions are either completely unknown or only partially known. In other words, the process involves exploring and discovering the optimal actions through trial and error. Note that learning can start from a satisfactory starting point, such as a state achieved through "supervised learning" or "inverse reinforcement learning" as an initial state.

Description is made on a case of supervised learning as an example. However, the machine learning is not limited to supervised learning.

Herein, description is made on a learning unit (omitted in illustration) for improving the accuracy of determination regarding a suspicious person and an individual requiring monitoring, through machine learning (supervised). The individual requiring monitoring is a person whose behavior is suspicious, or who might be unwell or potentially cause accidents or troubles, and therefore require attention and monitoring.

In the present embodiment, for example, the learning unit is provided to the recognition device 1 or the server device 2. The learning unit is used to create a necessary model for correctly identifying a suspicious person and an individual requiring monitoring and an unnecessary model for incorrect identifications. The necessary model is generated by learning from action history information acquired via the camera device 25, which provides information where the identification is accurate. Further, the unnecessary model is generated by learning from the action history information where the identification is inaccurate. Those pieces of action history information are recorded in the storage unit 31.

### [7. Additional Summary]

The interaction method 20 via a farm is executed by one or a plurality of computers, and is a communication method between the visitor 21 who visits the farm 24 and the remote person 22 who browses the information relating to the farm 24 via the farm. The method includes a step of acquiring the person information 7a relating to the visitor 21, which is registered in advance, based on the specification information 5a for specifying the visitor 21, so as to select the visitor 22 with whom the remote person 22 communicates, and a step of transmitting information of which the visitor 21 being selected is notified.

The person information 7a relating to the visitor 21 who visits the farm 24 can be acquired, and thus conversation can be initiated inside and outside the farm 24. The remote person 22 who cannot visit the farm 24 can appropriately ask the visitor 21 who is currently visiting the site to perform the agricultural task. The visitor 21 and the remote person 22 can collaborate to manage and operate the farm, thereby reducing the burden of resources and labor associated with farm management and operation.

Further, when the remote person 22 does not feel well or when the weather or temperature is not suitable for the body of the remote person 22, the remote person 22 can request the visitor 21 to perform the tasks.

Further, a person who is bedridden or has physical difficulties that prevent the person from visiting the farm 24 (the remote person 22) can collaborate with the visitor 22, including a family member and a nearby resident, to an cultivate agricultural product.

Further, when the remote person 22 intends to purchase an agricultural product, the remote person 22 can make an informed decision by knowing who cultivates the product before making the purchase.

· For example, the "information relating to the farm" includes information relating to at least one of cultivation management, farm management, and safety management.

The cultivation management information is information relating to the climate for the cultivation and growth of the agricultural product, corresponds to, for example, video information relating to the farm from a surveillance camera, weather forecast information, and information provided by a meteorological sensor, a temperature and ground temperature sensor, a sunlight sensor, and a rainfall sensor that are provided on the farm, and is a concept including information that can be converted into such information.

The farm management information is information relating to a state of equipment on the farm, corresponds to, for example, electricity usage information from an electricity usage sensor, flow rate information from a water flow meter, information relating to an ON/OFF status of a remote breaker, and information relating to an opening/closing status of an electric shut-off valve, and is a concept including information that can be converted into such information.

The safety management information is information relating to safety management such as information relating to the locking of the farm and an alarm for an intruder, includes information relating to, for example, an operating status of a remote locking tool and an alarm triggered by unauthorized entry into facilities such as a management hut, a storage room, and a toilet, and is a concept including information that can be converted into such information.

A user of a public farm or a farm of a care farm does not usually engage in agriculture, and does not have much experience and knowledge in the agricultural tasks. Such users of the farm collaborate with each other, and manage and operate the farm. With this, an effect of reducing the burden of resources and labor associated with farm management and operation can be exerted. Further, when users of a public farm or a farm of care farm can deepen their communication with each other through the agricultural tasks, for example, it is believed that this can contribute to community building, improving public safety and security, and even forming communities during disaster situations. Further, it can help farm users get to know each other. This can make it easier for users to collaborate in managing and operating the farm.

In the above-mentioned interaction method 20 via a farm, the person information 7a includes information relating to a potential visitor on the farm 24, and hence it is possible to contact the visitor 21 who plans to visit the farm in the future. Further, the agricultural task can be requested at an appropriate time.

The person information 7a includes affiliation and attribute information 8g relating to an affiliation and an attribute of a person and/or knowledge and experience information 8g relating to agricultural knowledge and experience. The information to be transmitted includes a request for the visitor 21 to perform the agricultural task on the farm 24. A step of paying a reward for the task is further included. Thus, a person to request the agricultural task and a person to pay a reward can be selected based on the background of the person to perform the agricultural task, in addition to the agricultural task skill of the person to request the task.

There is provided a virtual space formed of two-dimensional or three-dimensional spatial data relating to a captured space formed by imaging the farm 24 or a simulated image modeled after the imaging. By an operation of the virtual visitor 23 who visits the virtual space, the viewpoint image moving through the virtual space is displayed by the display unit 15a of the virtual visitor terminal 14 of the virtual visitor 23. A step of transmitting information to communicate between users is further included. Thus, the virtual visitors can have conversation on the farm 24 as the farm 24. They can enjoy conversation without being affected by a physical condition or weather and temperature. They can have conversation while viewing the same image of the farm 24. A person who is bedridden or has physical difficulties that prevent the person from visiting the farm 24 (the virtual visitor 23) can have conversation with the virtual visitor 23 including a family member and a nearby resident via the farm 24 in the virtual space. For example, as long as a person can access the virtual space, the person can visit any virtual spaces of farms 24 of care farms all over the world. A person who is bedridden or has physical difficulties that prevent the person from going outside can be taken out as a virtual visitor.

A step of acquiring the product information 28a including an agricultural product on the farm 24 and/or a product relating to an agricultural product by an operation of the virtual visitor 23, and a step of executing payment for purchasing the agricultural product or the related product are further included. Thus, an outside visitor as a virtual visitor can purchase the agricultural product on the farm 24. Further, when a seller of an agricultural product is the virtual visitor 23, another virtual visitor 23 considering a purchase can have conversation with the seller of the agricultural product in the virtual space, and then can purchase the agricultural product. It is possible to purchase an agricultural product from any farms 24 of care farms all over the world.

There are included a step of acquiring the position information 45a relating to the visitor 21 who visits the farm 24 and a step of displaying, at a position in the virtual space, which corresponds to the position information 45a, the avatar element 45b of the visitor 21, which is set in advance, by the display unit 3a, 4a, 15a of the user terminal 3, 4, 14. Thus, the visitor 21 can be remembered based on the features of the avatar element 45b.

There are further included a step of acquiring the coordinate position information 46a relating to the coordinate position of the virtual visitor 23 in the virtual space and a step of displaying the avatar element 46b of the avatar element 46b, which is set in advance, in an overlapping manner at the position in the visual field via the user terminal of the visitor 21, which corresponds to the coordinate position information 46a. Thus, the virtual visitor 23 can be remembered based on the feature of the avatar element 46b.

The predetermined position range 48a where an agricultural product is cultivated on the farm 24 and the coordinate position range 49a in the virtual space, which corresponds to the position range 48a, are set, and there is included a step of displaying the agricultural product display element 48b, 49b relating to the agricultural product in each of the position range 48a in the visual field through the user terminal 4 of the visitor 21 and the coordinate position range 49a displayed by the user terminal 3, 14 of the virtual visitor 23. Thus, the visitor 21 and the virtual visitor 23 can have conversation while grasping the same agricultural product or the same information relating to the agricultural product.

The server device 2 is communicably connected to the visitor terminal 4 of the visitor 21 who visits the farm 24 and the remote person terminal 3 of the remote person 22 who browses the information relating to the farm 24, and is a server device that is used for a farm system executing a communication method via a farm. The server device 2 includes the person information acquisition means 7 that acquires the person information 7a relating to the visitor 21 who is specified based on the specification information 5a for specifying the visitor 21, in order to select the visitor 21 as a transmission destination from the remote person 22.

The person information 7a relating to the visitor 21 who visits the farm 24 can be acquired, and thus conversation can be initiated inside and outside the farm 24. The remote person 22 who cannot visit the farm 24 can appropriately request the visitor 21 who is currently visiting the site to perform the agricultural task. The visitor 21 and the remote person 22 can collaborate to manage and operate the farm, thereby reducing the burden of resources and labor associated with farm management and operation.

Further, when the remote person 22 does not feel well or when the weather or temperature is not suitable for the body of the remote person 22, the remote person 22 can request the visitor 21 to perform the tasks.

Further, a person who is bedridden or has physical difficulties that prevent the person from visiting the farm 24 (the remote person 22) can collaborate with the visitor 22, including a family member and a nearby resident, to an cultivate agricultural product.

Further, when the remote person 22 intends to purchase an agricultural product, the remote person 22 can make an informed decision by knowing who cultivates the product before making the purchase.

The person information 7a includes affiliation and attribute information relating to an affiliation and an attribute of a person and/or knowledge and experience information relating to agricultural knowledge and experience, the transmission includes the request for the visitor 21, who is selected based on the person information 7a, to perform the agricultural task, and the server device 2 further includes the payment means 9 for paying a reward for the request. Thus, a person to request the task and a person to pay a reward can be selected based on the background of the person to perform the agricultural task, in addition to the agricultural task skill of the person to request the task.

Further, there are further provided the storage unit 31 that stores the virtual space formed of two-dimensional or three-dimensional spatial data relating to a captured space formed by imaging the farm 24 or a simulated image modeled after the imaging and the storage unit 31 that displays the viewpoint image in the virtual space based on an operation of the virtual visitor 23, by the display unit 15a (3a) of the virtual visitor terminal 14 of the virtual visitor 23. The payment means 9 executes payment for purchasing an agricultural product and a product relating to the agricultural product on the farm 24. Thus, the virtual visitors can have conversation on the farm 24 as the virtual space. They can enjoy conversation without being affected by a physical condition or weather and temperature. They can have conversation while viewing the same farm image.

The server device 2 is executed by one or a plurality of computers, and is a server device that is used for a farm system executing a communication method via a virtual space formed of two-dimensional or three-dimensional spatial data relating to a captured space formed by imaging the farm or a simulated image modeled after the imaging. The server device 2 further includes the person information acquisition means 7 that acquires the person information 7a relating to the user who is registered in advance, based on the specification information 5a for specifying the user, in order to select the user to communication with.

The person information 7a relating to the visitor 21 who visits the farm 24 can be acquired, and thus conversation between the farm and the virtual space can be initiated. The virtual visitor 23 from all over the word can be invited from the outside of the farm via the Internet.

The remote person terminal 3 is communicably connected to the visitor terminal 4 of the visitor 21 who visits the farm 24, and is a remote person terminal of the remote person 22 who browses the information relating to the farm 24, which is used for the farm system 10 executing a communication method via a farm. The remote person terminal 3 includes the person selection acquisition means 7 that requests the person information 7a relating to the visitor who is specified based on the specification information 5a for specifying the visitor 21, in order to select the visitor 21 as a transmission destination from the remote person 22.

The person information 7a relating to the visitor 21 who visits the farm 24 can be acquired, and thus conversation can be initiated inside and outside the farm 24. the remote person 22 who cannot visit the farm 24 can appropriately request the visitor 21 who is currently visiting the site to perform the agricultural task. The visitor 21 and the remote person 22 can collaborate to manage and operate the farm, thereby reducing the burden of resources and labor associated with farm management and operation.

Further, when the remote person 22 does not feel well or when the weather or temperature is not suitable for the body of the remote person 22, the remote person 22 can request the visitor 21 to perform the tasks.

Further, when the remote person 22 intends to purchase an agricultural product, the remote person 22 can make an informed decision by knowing who cultivates the product before making the purchase.

The person information 7a includes information relating to a potential visitor on the farm 24, and hence it is possible for the remote person terminal 3 to contact the visitor 21 who plans to visit the farm in the future. Further, the agricultural task can be requested at an appropriate time.

Further, the person information 7a includes affiliation and attribute information relating to an affiliation and an attribute of a person and/or knowledge and experience information relating to agricultural knowledge and experience, and the information to be transmitted includes the request for the visitor 21, who is selected based on the person information 7a, to perform the agricultural task. Thus, a person to request the task and a person to pay a reward can be selected based on the background of the person to perform the agricultural task, in addition to the agricultural task skill of the person to request the task.

The user terminal 3, 4, 14 is a user terminal that is used for a farm system executing a communication method via a virtual space, which is executed by one or a plurality of computers, the virtual space formed of two-dimensional or three-dimensional spatial data relating to a captured space formed by imaging the farm or a simulated image modeled after the imaging. The user terminal 3, 4, 14 includes the person selection means 10 that requests the person information relating to the user who is specified based on the specification information 5a for specifying the user, in order to select the user to which the information for initiating communication is transmitted. The person information 7a relating to the visitor 21 who visits the farm 24 or the virtual visitor 23 can be acquired. Thus, conversation between the farm 24 and the virtual space can be initiated.

The system 40 is a farm system for interaction between users who access the virtual space formed of two-dimensional or three-dimensional spatial data relating to a captured space formed by imaging the farm 24 or a simulated image modeled after the imaging, and includes the server device 2 and the user terminal 3, 14 of the virtual user. The server device 2 includes the storage unit 31 that stores the virtual space and the person information acquisition means 7 that acquires the person information 7a relating to the virtual visitor 23 who visits the virtual space. The user terminal 3, 14 is communicably connected to the server device 2, and includes the person selection means 10 that requests another piece of the person information 7a in the virtual space so that the virtual visitor 23 can select another virtual visitor to communicate with, and the transmission means 11 for executing transmission to the virtual visitor 23 being selected.

The virtual visitors can have conversation on the farm 24 as the virtual space. They can enjoy conversation without being affected by a physical condition or weather and temperature. They can have conversation while viewing the same farm image.

In the system 40 described above, the user terminal 3, 14 of the virtual visitor includes the product acquisition means 27 that acquires the product information 28a including an agricultural product and a product relating to the agricultural product on the farm. The server device 2 includes the payment means 13 for purchasing an agricultural product or a related product. Thus, an agricultural product can be purchased from the outside of the farm 24. For example, the purchase can be made based on conversation with a seller of an agricultural product. It is possible to purchase an agricultural product from any farms 24 of care farms all over the world.

### [8. Summary]

(1) The interaction method 20a with a producer/seller via a farm being a virtual space is executed by the server device 2 and the user terminal 3, 4, 14, and is an interaction method with a producer/seller via the virtual farm 24a formed of two-dimensional or three-dimensional spatial data relating to a captured space formed by imaging the farm 24 or a simulated image modeled after the imaging. The method includes a step of transmitting, to a user terminal of the virtual visitor, the viewpoint image moving through the virtual farm, based on an operation of the virtual visitor 23 who visits the virtual farm as a buyer/tourist, a step of acquiring the position information 45a relating to the visitor 21 who visits the farm as a producer/seller, and a step of displaying, at the coordinate position 46a on the virtual farm, which corresponds to the position information, the position information of the visitor, which is set in advance.
   Thus, the virtual visitor 23 can visit the virtual farm 24a for the purpose of sightseeing, checking/purchasing the farm-related product 41, or interacting with the seller/producer.
(2) The interaction method 20a with a producer/seller via a farm being a virtual space includes a step of acquiring the coordinate position information 46a relating to the coordinate position of the virtual visitor 23 on the virtual farm 24a and a step of displaying, at the position of the visual field through the user terminal 3 of the visitor 21, which corresponds to the coordinate position information, the avatar element 46b being set in advance for the virtual visitor, in an overlapping manner. Thus, the avatar elements can be visually recognized from both the sides, and hence interaction can be initiated.
(3) Further, the predetermined position range 48a including the agricultural product 41 on the farm 24 and the coordinate position range 49a on the virtual farm, which corresponds to the position range, are set. There is included a step of displaying the agricultural product display element 48b, 49b relating to the agricultural product in each of the position range in the visual field through the user terminal of the producer/seller and the coordinate position range displayed on the user terminal of the virtual visitor. Thus, the visitor 21 and the virtual visitor 23 can interact with each other while grasping the agricultural product display element 48b, 49b indicating the same agricultural product 41. Further, the agricultural product 41 being a purchase target can be selected.
(4) Further, there is included a step of performing conversation between the virtual visitor 23 and the visitor 21 by using audio information/text information 11a. Thus, interaction with a producer or another virtual visitor 23 can be achieved.
(5) Further, the farm-related product 41 including an agricultural product obtained on the farm 24 and a product relating to the agricultural product or the information medium 51 including a web site on which the farm-related product is listed includes the access information 43 including a link, and there is included a step where the virtual visitor 23 visits the virtual farm 24a via the link. Thus, The visitor can access the virtual farm 24a from an external sales location, where insights into the farm-related products 41 can be gained by observing the farm and interacting with the producer.
(6) Further, there is provided a step of acquiring the person information 7a relating to the visitor who is registered in advance, based on the specification information 5a for specifying the visitor, in order to select the visitor 21 with whom the virtual visitor 23 performs conversation. Thus, the person information relating to the conversation partner can be acquired, and hence conversation can be initiated.
(7) Further, the person information 7a includes affiliation and attribute information relating to an affiliation and an attribute of a person and/or knowledge and experience information relating to agricultural knowledge and experience. Thus, a matched partner can be selected, and conversation therebetween can further be encouraged.
(8) Further, there is provided a step of executing payment for purchasing the farm-related product 41 including an agricultural product obtained on the farm 24 and a product relating to the agricultural product. Thus, the farm-related product 41 can be purchased on the virtual farm 24a.
(9) The server device is the server device 2 that is used for executing the interaction method 20a with a producer/seller via the virtual farm 24a formed of two-dimensional or three-dimensional spatial data relating to a captured space formed by imaging the farm 24 or a simulated image modeled after the imaging. The server device 2 includes the coordinate acquisition means 18 that acquires the position information 45a relating to the visitor 21 who visits the farm as a producer/seller, and the virtual space processing means 17 that transmits, to the user terminal 3, 14 of the virtual visitor, the viewpoint image moving through the virtual farm, based on an operation of the virtual visitor 23 who visits the virtual farm as a buyer/tourist, and displays the avatar element 45b being set in advance for the visitor at the coordinate position on the virtual farm, which corresponds to the position information.
   Thus, the virtual visitor 23 as a tourist can the virtual farm 24a in order to confirm/purchase the farm-related product 41 or interact with a producer/seller.
(10) In the server device 2 described above, the coordinate acquisition means 18 acquires the coordinate position information 46a relating to the coordinate position of the virtual visitor 23 on the virtual farm 24a, and the virtual space processing means 17, displays, at the position in the visual field through the user terminal 4 of the visitor 21, which corresponds to the coordinate position information, the avatar element 46b being set in advance for the virtual visitor in an overlapping manner. Thus, the avatar elements can be visually recognized from both the sides, and hence interaction can be initiated.
(11) Further, the predetermined position range 48a including the agricultural product 41 on the farm 24 and the coordinate position range 49a on the virtual farm 24a, which corresponds to the position range, are set. The virtual space processing means 17 displays the agricultural product display element 48b, 49b relating to the agricultural product in each of the position range in the visual field through the user terminal 4 of the producer/seller and the coordinate position range displayed by the user terminal 3, 14 of the virtual visitor 23. Thus, the visitor 21 and the virtual visitor 23 can interact with each other while grasping the agricultural product display element 48b, 49b indicating the same agricultural product 41. Further, the agricultural product 41 being a purchase target can be selected.
(12) Further, there is included the storage unit 31 that stores the product information 28 relating to the farm-related product 41 including the agricultural product on the farm 24 and a product relating to the agricultural product, the product information being transmitted to the user terminal 3, 14 of the virtual visitor 23. Thus, the product information 28 associated with the agricultural product display element 48b, 49b being selected can be acquired.
(13) Further, the payment means 9 for purchasing the farm-related product 41 is further included. Thus, the farm-related product 41 can be purchased on the farm in the virtual space.
(14) Further, there is included the person information acquisition means 7 that acquires the person information 7a relating to the visitor who is specified based on the specification information 5a for specifying the visitor, in order to select the visitor 21 with whom the virtual visitor 23 performs conversation. Thus, the person information 7a relating to the conversation partner, and hence conversation can be initiated.
(15) Further, the person information 7a includes affiliation and attribute information relating to an affiliation and an attribute of a person and/or knowledge and experience information relating to agricultural knowledge and experience. Thus, a matched partner can be selected, and conversation therebetween can further be encouraged.
(16) The system 52 for linking a farm-related product with a virtual space includes the farm-related product 41 including the agricultural product obtained on the farm 24 or the information medium 51 including a web site on which the farm-related product is listed, and the server device described above. The farm-related product or the information medium includes the access information 43 including a link for visiting the virtual farm 24a.

Thus, the visitor can access the virtual farm 24a from an external sales location, where insights into the farm-related products 41 can be gained by observing the farm and interacting with the producer.

### Reference Signs List

- 1: Recognition device
- 2: Server device
- 3: Remote person terminal
- 3a: Display unit
- 4: the visitor terminal
- 5: Person specification means
- 6: Person specification database
- 7: Person information acquisition means
- 7a: Person information
- 8: Person information database
- 9: Payment means
- 10: Person selection acquisition means
- 11: Transmission means
- 11a: Transmission information
- 11b: Completion information
- 12: Request/reward registration means
- 12a: Request information
- 13: Payment information
- 14: Virtual visitor terminal (head-mounted display system)
- 15: Head-mounted display
- 15a: Display unit
- 15b: Head position detection sensor
- 15c: Speaker
- 15d: Microphone
- 15e: Operation unit
- 16: Control device
- 17: Virtual space processing means
- 17a: Operation information
- 18: Coordinate acquisition means
- 19: Update means
- 20: Fourth system
- 20a: Interaction method
- 21: Visitor
- 22: Remote person
- 23: Virtual visitor
- 24: Farm
- 25: Camera device
- 25a: Facial image information
- 26: Communication network
- 27: Product acquisition means
- 28: Product information database
- 29: Second system
- 30: CPU
- 31: Memory
- 32: Input/output device
- 33: Connection port
- 33a: Storage device
- 34: Communication circuit
- 35: Bus line
- 36: Server program
- 37: Browser program
- 38: OS
- 39: Terminal program
- 40: Third system
- 41: Farm-related product
- 42: Three-dimensional camera
- 43: Access information
- 44: System
- 45a: Position information
- 45b: Avatar element
- 46a: Coordinate position information
- 46b: Avatar element
- 47: Display screen
- 48a: Position range
- 48b: Agricultural product display element
- 49a: Coordinate position range
- 49b: Agricultural product display element
- 50: Display screen
- 51: Information medium
- 52: System for linking a farm-related product with a virtual space

## Claims

1. A method for interaction with a producer/seller via a virtual farm composed of two-dimensional or three-dimensional spatial data relating to a space formed by imaging the farm or a simulated space modeled after the imaging, the method being executed by a server device and a user terminal and comprising:
a step of transmitting, to a user terminal of a virtual visitor, a viewpoint image of moving through the virtual farm, based on an operation of the virtual visitor who visits the virtual farm as a buyer/tourist;
a step of acquiring position information relating to a visitor who visits the farm as a producer/seller; and
a step of displaying, at a coordinate position on the virtual farm, an avatar element being set in advance for the visitor, the coordinate position corresponding to the position information.

2. The method for interaction with a producer/seller via a virtual farm according to claim 1, further comprising:
a step of acquiring coordinate position information relating to a coordinate position of the virtual visitor on the virtual farm; and
a step of displaying, at a position in a visual field through a user terminal of the visitor, an avatar element being set in advance for the virtual visitor in an overlapping manner, the position corresponding to the coordinate position information.

3. The method for interaction with a producer/seller via a virtual farm according to claim 2, wherein
a predetermined position range including an agricultural product on the farm and a coordinate position range on the virtual farm are set, the coordinate position range corresponding to the position range, and
the method further comprises a step of displaying an agricultural product display element relating to the agricultural product in each of the position range in a visual field through a user terminal of the producer/seller and the coordinate position range displayed on a user terminal of the virtual visitor.

4. The method for interaction with a producer/seller via a virtual farm according to any one of claims 1, 2, and 3, further comprising:
a step of performing conversation between the virtual visitor and the visitor by using audio information/text information.

5. The method for interaction with a producer/seller via a virtual farm according to any one of claims 1, 2, 3, and 4, wherein
a farm-related product including an agricultural product obtained on the farm and a product relating to the agricultural product or an information medium including a web site on which the farm-related product is listed includes access information including a link for visiting the virtual farm, and
the method further comprises a step of visiting the virtual farm via the access information.

6. The method for interaction with a producer/seller via a virtual farm according to claim 5, further comprising:
a step of acquiring person information relating to a visitor who is registered in advance, based on specification information for specifying the visitor, in such a way as to select the visitor with whom the virtual visitor performs conversation.

7. The method for interaction with a producer/seller via a virtual farm according to claim 6, wherein
the person information includes affiliation and attribute information relating to an affiliation and an attribute of a person and/or knowledge and experience information relating to agricultural knowledge and experience.

8. The method for interaction with a producer/seller via a virtual farm according to any one of claims 1, 2, 3, 4, 5, 6, and 7, further comprising:
a step of executing payment for purchasing a farm-related product including an agricultural product obtained on the farm and a product relating to the agricultural product.

9. A server device being used for a method for interaction with a producer/seller via a virtual farm composed of two-dimensional or three-dimensional spatial data relating to a space formed by imaging the farm or a simulated space modeled after the imaging, the method being executed by a server device and a user terminal, the server comprising:
a coordinate acquisition means for acquiring position information relating to a visitor who visits the farm as a producer/seller; and
a virtual space processing means for transmitting a viewpoint image of moving through the virtual farm, based on an operation of a virtual visitor who visits the virtual farm as a buyer/tourist, to a user terminal of the virtual visitor, and displaying, at a coordinate position on the virtual farm, an avatar element being set in advance for the visitor, the coordinate position corresponding to the position information.

10. The server device according to claim 9, wherein
the coordinate acquisition means acquires coordinate position information relating to a coordinate position of the virtual visitor on the virtual farm, and
the virtual space processing means displays, at a position in a visual field through a user terminal of the visitor, an avatar element being set in advance for the virtual visitor in an overlapping manner, the position corresponding to the coordinate position information.

11. The server device according to claim 10, wherein
a predetermined position range including an agricultural product on the farm and a coordinate position range on the virtual farm are set, the coordinate position range corresponding to the position range, and
the virtual space processing means displays an agricultural product display element relating to the agricultural product in each of the position range in a visual field through a user terminal of the producer/seller and the coordinate position range displayed on a user terminal of the virtual visitor.

12. The server device according to claim 11, further comprising:
a storage unit configured to store product information relating to a farm-related product including an agricultural product on the farm and a product relating to the agricultural product, the product information being transmitted to a user terminal of the virtual visitor.

13. The server device according to claim 12, further comprising:
a payment means for purchasing the farm-related product.

14. The server device according to any one of claims 9, 10, 11, 12, and 13, further comprising:
a person information acquisition means for acquiring person information relating to the visitor specified based on specification information for specifying the visitor, in such a way as to select the visitor with whom the virtual visitor performs conversation.

15. The server device according to claim 14, wherein
the person information includes affiliation and attribute information relating to an affiliation and an attribute of a person and/or knowledge and experience information relating to agricultural knowledge and experience.

16. A system for linking a farm-related product with a virtual space, comprising:
a farm-related product including an agricultural product obtained on the farm and a product relating to the agricultural product or an information medium including a web site on which the farm-related product is listed; and
the server device according to any one of claims 9, 10, 11, 12, 13, 14, and 15, wherein
the farm-related product or the information medium include access information including a link for visiting.
